(19)

Europäisches
Patentamt
European
Patent Office
Office européen
des brevets

(11) **EP 1 967 969 A2**

(12) **EUROPEAN PATENT APPLICATION**

(43) Date of publication:
**10.09.2008 Bulletin 2008/37**

(51) Int Cl.:
*G06F 17/30* (2006.01)   *G06Q 10/00* (2006.01)

(21) Application number: **08011467.1**

(22) Date of filing: **08.12.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.12.2004 JP 2004355452**
**31.03.2005 JP 2005103084**

(62) Document number(s) of the earlier application(s) in accordance with Art. 76 EPC:
**05026848.1 / 1 669 893**

(71) Applicant: **NTT DoCoMo, Inc.**
**Chiyoda-ku**
**Tokyo 100-6150 (JP)**

(72) Inventors:
• **Kasai, Hiroyuki**
**c/o NTT DoCoMo Inc.,**
**SANNO PARK TOWER**
**Tokyo 100-6150 (JP)**

• **Kurakake, Shoji**
**c/o NTT DoCoMo Inc.,**
**SANNO PARK TOWER**
**Tokyo 100-6150 (JP)**
• **Yamazaki, Kenichi**
**c/o NTT DoCoMo Inc.,**
**SANNO PARK TOWER**
**Tokyo 100-6150 (JP)**
• **Kawasaki, Norihiro**
**c/o NTT DoCoMo Inc.,**
**SANNO PARK TOWER**
**Tokyo 100-6150 (JP)**

(74) Representative: **Henseler, Daniela**
**Sparing, Röhl, Henseler**
**Postfach 14 04 43**
**40074 Düsseldorf (DE)**

Remarks:
This application was filed on 25-06-2008 as a divisional application to the application mentioned under INID code 62.

(54) **Information notification system and information notification method**

(57)   A notification-purpose user state managing apparatus, a notification controlling apparatus, an information notification apparatus, an information notification system and an information notification method capable of reducing an unpleasant feeling and a burden and encouraging a user to recognize information are provided. The information notification system includes a notification-purpose user state managing apparatus including user's internal state assuming means for assuming a user's internal state based on an observable state element and user's notification utility assuming means for assuming utility to a user receiving information when information is notified based on the user's internal state; and a notification controlling apparatus including notification executing means for determining whether or not information is notified based on the utility and notifying information based on the determination. Whether notified information is renotified is determined based on the result of assumption of user's information recognizability, whereby it is not necessarily required to use a specified user's reaction indicating that information has been received, and whether information has been received is assumed, and if it is determined that information has not been received, notified information is renotified, whereby a possibility that the user recognizes information can be increased.

FIG. 1

EP 1 967 969 A2

**Description**

The present invention relates to an information notification system and an information notification method, and particularly to an information notification system and an information notification method for performing control related to information notification, and renotifying information presented to a user which failed to be recognized by the user.

Currently, various information notification apparatuses such as personal computers (hereinafter abbreviated as PC), portable terminals such as PDA (Personal Digital Assistance) and cellular phones, TVs, radios and car navigation systems are used. In this situation, many methods for controlling information notification based on the type of information, a behavior of a user and ambient circumstances have been proposed.

For example, some information notification apparatuses have means for giving a priority to information and means for determining an importance appropriate to the interest of a user, determine an order in which information is displayed and a fineness of information, and present information (see, for example, JP-A-9-81099). Such information notification apparatuses have means for controlling timing of collected information from a network.

Other information notification apparatuses have means for acquiring a user's state from various information sources, adjusting an information amount, and presenting information in accordance with a behavior of a user in good timing. In addition, as techniques for acquiring appropriate information from a large amount of information, there are Push type information notification techniques of sending information matching a user's preference from a server, information filtering techniques of selecting/presenting information matching a user's preference from sent information, agent techniques of collecting information from a network in accordance with a user's preference, and the like.

For peripheral vision information notification techniques, researches are vigorously conducted in the field of Attentive User Interface (AUI). In these researches, studies are conducted for the purpose of efficiently displaying a message on the end of a screen on a monitor of a desktop PC irrespective of the contents of information or according to the contents of information. This technique is described in, for example, "Attentive User Interface" special edition, ACM Communications of the ACM, March, 2003, Vol. 46, No. 3, pp. 31-72.

Studies are conducted on a recognizability of information when information is presented at such a location on the periphery of a screen. These studies are described in, for example, D. Scott McCrickard, Richard Catrambone, C.M. Chewer, John T. Stasko, "Establishing tradeoffs that leverage attention for utility: empirically evaluating information display in notification systems," International Journal of Human-Computer Studies, V. 58 n. 5, p. 547-582, May 2003.

As described previously, user's preference information obtained from specified settings by the user, and histories such as user's information usage and user's response to information is compared with meta-information explaining the information contents set in advance, results from analysis, and information contents leading to candidates for provision obtained from information, whereby the priority and the importance of the provided candidate information for the user can be somewhat set.

However, the importance of information and the priority thereof for the user are rarely determined by such somewhat static information, but they are dependent on dynamically changing user information and peripheral information, or significantly dependent even on feelings of the user. In other words, it may be said that the priority and the importance are not determined unless all such situations are considered. Accordingly, even if the importance and the priority of information can be somewhat determined, the importance or the like felt by the user greatly varies depending on the method for providing information, namely timing for provision and the method for expressing provided information.

In this respect, there is an information presenting apparatus assuming user's spare time to realize scheduling of information notification (see, for example, JP-A-2000-99441). However, the user is encouraged to spend time for acquirement of information during the spare time. Such information notification has an aspect in common with acquirement of attention by incoming call sounds and vibrations irrespective of current user's state in a current call of a cellular phone. Namely, presenting information during user's spare time is not necessarily coincident with current calling to the cellular phone, but at each time, what the user gives attention to is generally unknown, and therefore it is difficult to know user's spare time in an exact sense.

If attention is forcefully acquired from a point different from a point given attention by the user in this state, information is accepted if the contents of information are important for the user. However, since it is difficult to completely set the importance, it is highly conceivable that an unpleasant feeling and a burden to the user is resultantly caused so that information notification is no longer used as a service.

Further, not only a method for notifying only information important for the user as in a complete Push type information notification service, but also a technique capable of presenting information somewhat inconsistent with user's preference as well while alleviating an unpleasant feeling and a burden to the user, irrespective of the contents of information, is important. Such a demand is high as a demand from information providers distributing advertisements and the like.

For such problems, there is a peripheral vision information provision technique of notifying information on the peripheral area of a screen as a technique for providing information on a display of a personal computer while considering a burden to the user.

Generally, if a variety of information such as advertisement information is sent by a Push type transmitter and the like, the user receiving the information displays the received information on a display screen, and outputs the information as sound information. In this case, whether displayed information or the like has been recognized cannot be known by the sender of this information.

Among such advertisement information, information having a time limit, such as a time service, is preferably notified before the time span, and if the user does not recognize the information, the information is preferably renotified to be recognized. However, as described above, whether information has been recognized by the user cannot be known by the sender of the information.

Some commercially available electronic mail software is designed to provide display allowing a receiving user to easily identify an electronic mail to which the receiving user does not make a reference, and performs control so as not to send an unsealing message to a sender for a mail which has not been unsealed yet.

However, the conventional technique described above has the following problems.

Many information notification methods of controlling notification timing, an information amount, a display method and the like in consideration with the type of information, user's behavior and ambient circumstances have been proposed. However, they do not consider a human internal state element dynamically and indeterminately changing, and their control rule based on each element is static and lacking in flexibility.

The peripheral vision information provision technique assumes information notification in a state in which a user sits in front of a personal computer, and information notification allowing for states of the environment around the user and the user himself/herself which can be dynamically changed are not considered.

Thus, these techniques do not go beyond performing control with a static notification method according to provided information in consideration with a task interruption level due to information notification.

Notification of information to a user present under an environment in which ambient circumstances dynamically change like, for example, a portable display terminal is not considered.

Thus, an information notification method which does not place emphasis on consistency with user's preference of the contents of provided information, but considers a dynamically changing user's state, and can reliably encourage a user to recognize information for any type of contents without causing an unpleasant feeling and a burden to the user is required.

The information notification apparatus according to the conventional technique described above adaptively controls notification at the time of notification of information, and does not consider whether notified information has been recognized by the user.

The above-mentioned mail software performs control according to a specified user interaction to the software. Thus, the specified user interaction to the notification apparatus is prerequisite, and for example, for information which is displayed one-sidedly on the screen while flowing or changing, whether the user has received the information is unknown because there is no user's specified interaction. Information which has not been received is never displayed again, the user cannot recognize this information in the future, thus causing a disadvantage to the user or a notifier of information.

Thus, it is an object of the present invention to provide an information notification system and an information notification method capable of reducing an unpleasant feeling and a burden and encouraging a user to recognize information.

The invention thus concerns an information notification system, comprising:

a notification-purpose user state managing apparatus; and
a notification controlling apparatus,
wherein the notification-purpose user state managing apparatus comprises:
user's internal state assuming means for assuming a user's internal state based on an observable state element; and
user's notification utility assuming means for assuming utility to a user receiving information when information is notified, based on the user's internal state, and
the notification controlling apparatus comprises:
notification executing means for determining whether or not information is notified based on the utility and notifying information based on the determination. This configuration makes it possible to effectively notify information to the user because an internal state can be assumed from observable state elements, for example a user's operation state and a task state, and based on the assumption, the effect of information notification can be assumed.

The user's internal state assuming means may assume at least one of a n information recognizability showing a level at which a user perceives and recognizes the contents of information and a task interruption level showing a level at which a task being executed by the user is interrupted by information notification, as an element showing the user's internal state. This configuration makes it possible to effectively notify information to the user.

The user's notification utility assuming means may calculate an expected utility showing utility expected when information is notified, based on the user's internal state. This configuration makes it possible to effectively notify information to the user.

The system may further comprise observable state element determining means for determining whether or not an observable state element having a predetermined occurrence frequency or below among the accumulated information and a newly acquired observable state element coincide with each other. This configuration makes it possible to effectively notify information to the user.

The system may further comprise

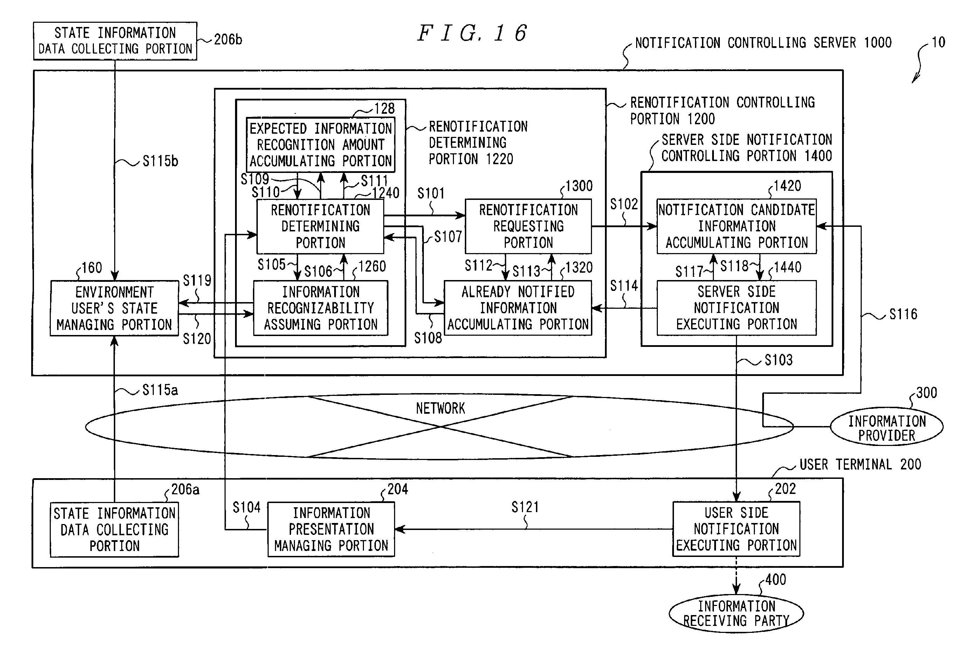

information recognizability assuming means (corresponding to, for example, an information recognizability assuming portion 1260 in FIG. 16) for assuming an information recognizability showing a level at which the user perceives and recognizes the contents of notified information being information notified to the user; and

determining means (corresponding to, for example, a renotification determining portion 1240 in FIG. 16) for determining whether the notified information is renotified based on the result of assumption by the information recognizability assuming means,

wherein the notified information is renotified according to the result of determination by the determining means. This configuration makes it possible to renotify information according to user's information recognizability.

The system may further comprise environment state acquiring means (corresponding to, for example, an environment user's state managing portion 160 in FIG. 16) for acquiring the user's environment state,

wherein the information recognizability assuming means assumes the information recognizability based on the user's environment state acquired by the environment state acquiring means. This configuration makes it possible to determine user's information recognizability based on the use's state, the user's reaction and the like at the time of notification after notification of information and renotify the information based on the result of the determination. Particularly, in Push type information notification not associated with user's request, information can be reliably notified to the user.

The system may further comprise expected recognized information amount calculating means (corresponding to, for example, a renotification determining portion 1240 in FIG. 16) for calculating an expected recognized information amount being an amount assumed based on the result of assumption by the information recognizability assuming means and recognized for the notified information,

wherein the determining means determines whether the notified information is renotified according to the expected recognized information amount calculated by the expected recognized information amount calculating means. By determining whether information is renotified according to the expected recognized information amount, information can be appropriately notified.

The system may further comprise expected recognized information amount accumulating means (corresponding to, for example, an expected information recognition amount accumulating portion 128 in FIG. 16) for accumulating an expected recognized information amount calculated by the expected recognized information amount calculating means,

wherein the determining means determines whether the notified information is renotified according to an expected recognized information amount newly calculated by the expected recognized information amount calculating means and a past expected recognized information amount accumulated in the expected recognized information amount accumulating means. By reusing an expected information recognition amount calculated at the time of determination of renotification in the past, an expected information recognition amount for same information presented multiple times can be added, whereby even if each amount of information notified is small, more accurate determination of renotification can be realized on the assumption that the possibility that information has been recognized is high.

The invention further concerns an information notification method comprising:

a user's internal state assuming step of assuming a user's internal state based on an observable state element;

a user's notification utility assuming step of assuming utility to a user receiving information when information is notified, based on the user's internal state; and

a notification executing step of determining whether or not information is notified based on the utility and notifying information based on the determination.

In the user's internal state assuming step, at least one of an information recognizability showing a level at which a user perceives and recognizes the contents of information and a task interruption level showing a level at which a task being executed by the user may be interrupted by information notification is assumed as an element showing the user's internal state. This configuration makes it possible to effectively notify information to the user.

In the user's notification utility assuming step, an expected utility showing utility assuming expected when information is notified may be calculated based on the user's internal state. This configuration makes it possible to effectively notify information to the user.

Further an observable state element determining step of determining whether or not an observable state element having a predetermined occurrence frequency or below among the accumulated information and a newly acquired observable state element coincide with each other may be comprised. This configuration makes it possible to effectively notify information to the user.

The method may further comprise:

an information recognizability assuming step of assuming an information recognizability showing a level at which the user perceives and recognizes the contents of notified information being information notified to the user; and a determining step of determining whether the notified information is renotified based on the result of assumption in the information recognizability assuming step, wherein the notified information is renotified according to the result of determination in the determining step. This configuration makes it possible to renotify information according to the user's information recognizability.

The method may further comprise an environment state acquiring step of acquiring the user's environment state, wherein in the information recognizability assuming step, the information recognizability is assumed based on the user's environment state acquired in the environment state acquiring step. This configuration makes it possible to determine user's information recognizability based on the use's state, the user's reaction and the like at the time of notification after notification of information and renotify the information based on the result of the determination. Particularly, in Push type information notification not associated with user's request, information can be reliably notified to the user.

The method may further comprise an expected recognized information amount calculating step of calculating an expected recognized information amount being an amount assumed based on the result of assumption in the information recognizability assuming step and recognized for the notified information,

wherein in the determining step, whether the notified information is renotified according to the expected recognized information amount calculated in the expected recognized information amount calculating step is determined. Information can be appropriately renotified by determining whether the notified information is renotified according to the expected recognized information amount.

The method may further comprise an expected recognized information amount accumulating step of accumulating an expected recognized information amount calculated in the expected recognized information amount calculating step,

wherein in the determining step, whether the notified information is renotified according to an expected recognized information amount newly calculated in the expected recognized information amount calculating step and a past expected recognized information amount accumulated in the expected recognized information amount accumulating step. By reusing an expected information recognition amount calculated at the time of determination of renotification in the past, an expected information recognition amount for same information presented multiple times can be added, whereby even if each amount of information notified is small, more accurate determination of renotification can be realized on the assumption that the possibility that information has been recognized is high.

According to the present invention, an information notification system and method capable of reducing an unpleasant feeling and a burden and encouraging a user to recognize information can be realized. It can be additionally possible to renotify information according to user's information recognizability.

User's information recognizability is assumed, and whether notified information is renotified is determined based on the result of assumption, whereby it is not necessarily required to use a specified user's reaction indicating that information has been received, and whether information has been received is assumed, and if it is determined that information has not been received, notified information is renotified, whereby a possibility that the user recognizes information can be increased, and lost information can be compensated.

The invention will now be described in detail in connection with embodiments as shown in the drawings.

FIG. 1 is a block diagram showing an information notification system according to an example of the invention.

FIG. 2 is a sequence diagram showing inquiry type information notification processing.

FIG. 3 is a sequence diagram showing event type information notification processing.

FIG. 4 is an explanatory view showing one example of a Bayesian network for information notification.

FIG. 5 is an explanatory view showing one example of an information expression method.

FIG. 6 is an explanatory view showing one example of a decision making network including determination of a notification utility.

FIG. 7 is an explanatory view showing one example of the decision making network including determination of a notification utility.

FIG. 8 is an explanatory view showing an information expression index table.

FIG. 9 is an explanatory view showing one example of the Bayesian network and a conditional probability table.

FIG. 10 is a schematic diagram showing an example of a display adjusting button interface.

FIG. 11 is an explanatory view showing a feedback information index.

FIG. 12 is an explanatory view showing a history information table.

FIG. 13 is an explanatory view showing an occurrence frequency table.

FIG. 14 is a flow chart showing processing in a model accuracy improving notification controlling portion.

FIG. 15 is a sequence diagram showing state combined event type information notification processing.

FIG. 16 is a block diagram showing a configuration of one alternative example of an information renotification system according to an embodiment of the invention.

FIG. 17 shows an information presentation interface according to an embodiment of the invention.

FIG. 18 is a flow chart showing an operation of the information renotification system according to an embodiment of the invention.

FIG. 19 shows an example of the Bayesian network according to an embodiment of the invention.

FIG. 20 is a block diagram showing a configuration of one alternative example of the information renotification system according to an embodiment of the invention.

FIG. 21 is a block diagram showing a configuration of another alternative example of the information renotification system according to an embodiment of the invention.

Here, throughout the whole drawings for describing the embodiments, like reference characters designate those having the same functions and descriptions thereon will be omitted.

(Configuration for information notification)

An information notification system related to the invention controls information notification timing as well as a method of presenting it in consideration of two user's internal states, that is, information recognition by a user and discontinuance of the on-going user task due to provision of information on executing information notification. That is, to users who live in the real world where a variety of information display terminals straggle and to users who own information display terminals, timing of information notification and information expression is adjusted and information notification is implemented so as to enhance users' information recognition highly and restrain users' task discontinuance lowly.

Thereby, it will become possible to restrain increase in uncomfortableness as well as load increase at the side of users due to discontinuance/interruption of tasks by users in the real world in case of proactive information notification that did not occur in information notification at a type of conventional initiative (request) of users.

Specifically, a user gazing state onto an information display terminal is detected and information notification is implemented in consideration of tasks on the information terminal, user's task proficiency, user motion state, information contents (information urgency, information amount) and information recognition speed etc. Such information notification will not be sudden one-way compulsory information notification without consideration of user states but become information notification in consideration of information requesting state or in other words, a receiving state at the user's side. And adjustment on information notification timing as well as information expression/display method will enable information notification while information recognition is being enhanced and task discontinuance level is being restrained low.

As a form of presenting information to users, any form of texts, image and video etc. is considered.

In addition, the information notification system related to the present embodiment includes any information notification apparatus capable of presenting information, for example, a display type apparatus. For example, desk top personal computers, television sets, electronic billboards, information windows, notebook personal computers, PDAs, hand-held terminals, cellular phones, wrist watches, future notebook type displays etc. are included as information notification apparatus.

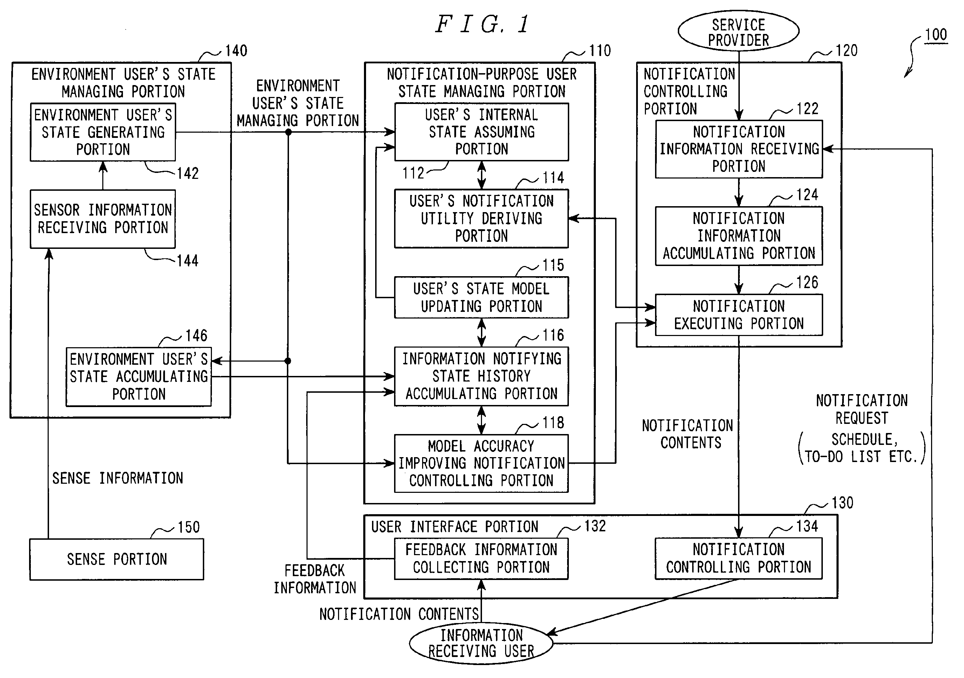

Subsequently, information notification system related to the present embodiment will be described with reference to FIG. 1.

An information notifying system related to the present embodiment comprises an information notifying apparatus 100.

The information notifying apparatus 100 comprises a notification-purpose user state managing portion 110 as a notification-purpose user state managing apparatus of expressing a user state related to information notification, a user interface portion 130, a notification controlling portion 120 as an environment user's state managing portion 140 as well as a notification controlling apparatus, all of which are connected to the notification-purpose user state managing portion 110 and a sense portion 150 connected to the environment user state managing portion 140.

The notification-purpose user state managing portion 110 comprises a user's internal state assuming portion 112 as user internal state assuming means, a user's state model updating portion 115 as user state model updating means and a user's notification utility deriving portion 114 as user notification utility deriving means which are both connected to the user's internal state assuming portion 112, an information notifying state history accumulating portion 116 as information accumulating means connected to the user's state model updating portion 115 and a model accuracy improving notification controlling portion 118 as observable state element discriminating means connected to the information notifying state history accumulating portion 116.

The notification controlling portion 120 comprises a notification information receiving portion 122, notification information accumulating portion 124 connected to the notification information receiving portion 122 and a notification executing portion 126 connected to the notification information accumulating portion 124, the user notification utility deriving portion 114 and the model accuracy improving notification controlling portion 118.

The user interface portion 130 comprises a feedback information collecting portion 132 connected to the information notifying state history accumulating portion 116 and a notification information display controlling portion 134 connected to a notification executing portion 126.

The environment user's state managing portion 140 comprises an environment user's state generating portion 142 connected to the user's internal state assuming portion 112 as well as the model accuracy improving notification controlling portion 118, a sensor information receiving portion 144 connected to the environment user's state generating portion 142 as well the sense portion 150 and an environment user's state accumulating portion 146 connected to the environment user's state generating portion 142, the user's internal state assuming portion 112, the model accuracy improving notification controlling portion 118 and the information notifying state history accumulating portion 116.

The respective portions of the above described information notifying apparatus 100 are configured by, for example, a module.

(Configuration of notification-purpose user state managing portion 110)

At first, respective portions configuring the notification-purpose user state managing portion 110 will be described.

The notification-purpose user state managing portion 110 dynamically manages, with conditional probability expressions, relationships among two elements of "information recognizability" being a human internal state element and "task interruption level", observable state element such as "gazing state" being obtainable by the sense portion 150 and having a causal relationship with the preceding two internal state elements, "user motion state", "task state" and the like and "information expression" element determining a method of displaying information at the time of notification.

The user's internal state assuming portion 112 correlates a user's internal state directly brought into consideration at the time of information notification and a user's state as well as a state of the information display terminal related thereto with user's state information inputted from the environment user's state managing portion 140 as well as environment state information such as a state of information display terminal as a base and manages them. In addition, the user's internal state assuming portion 112 predicts (assumes) the user's internal state from relationship between the user's internal state elements directly brought into consideration in case of notifying information and user state element related thereto. That is, the internal state is assumed from observable state elements. In particular, as for the internal states, the task interruption level and the information recognizability are predicted from changes in the task, that a user is implementing mainly besides information notification, for example, web browsing and E-mail operations etc.

The user's notification utility deriving portion 114 assumes the utility (effect) level to a user by information notification based on the relationship between the states. For example, a utility value indicating the utility (effect) level to a user by information notification is derived. That is, utility values by information provision in respective time are derived from two elements in relation of a trade-off called as task discontinuance and information recognition. In addition, the user's notification utility deriving portion 114 determines optimum notification timing and "information expression".

A user's state model updating portion 115 realizes updates of the model information itself of providing a basic structure of managing the user state. That is, the user's state model updating portion 115 learns, dynamically changes and sequentially updates random variables of indicating relationship between the state elements based on the accumulated information accumulated in the information notifying state history accumulating portion 116 to be described later so as to realize improvement in assumption accuracy on the internal states.

The information notifying state history accumulating portion 116 accumulates/manages the history of the state having undergone information notification and the state fed back from the user. For example, the feedback information inputted from the feedback information collecting portion 132 by the user and the state element value of the time when information notification was implemented by the environment user's state accumulating portion 146 are accumulated/managed. In addition, also in case of implementing no information notification, the information notifying state history accumulating portion 116 may accumulate/manage the history of the state not having undergone information notification and the state fed back from the user.

A model accuracy improving notification controlling portion 118 detects a combination of the state elements with low frequency of occurrence based on the information accumulated on the information notifying state history accumulating portion 116, monitors whether or not the combination occurs, and makes a request for information notification to the notification executing portion 126 in case of an occurrence. Such an arrangement proactively updates random variables indicating the relationship between the state elements as well as the whole structure. That is, the model accuracy improving notification controlling portion 118 causes an event for deriving a relationship, that the user's state model updating portion 115 cannot complement, to occur proactively and thereby realizes improvement in accuracy in the relationship between the elements.

(Configuration of notification controlling portion 120)

Subsequently, respective portions configuring the notification controlling portion 120 will be described.

The notification information receiving portion 122 receives notification information provided by an information provider such as a service provider, for example. A notification information accumulating portion 124 accumulates notification information received by the notification information receiving portion 122.

The notification executing portion 126 determines whether or not to implement notification based on an expected utility to be described later derived from the user's notification utility deriving portion 114 and implements information notification based on that determination. For example, the notification executing portion 126 implements notification at last on the timing of information notification and the method of information expression in information notification.

(Configuration of environment user's state managing portion 140)

Subsequently, respective portions of configuring the environment user's state managing portion 140 will be described.

A sensor information receiving portion 144 receives sense information, for example, sensor information and interaction information from the sense portion 150. The environment user's state generating portion 142 converts/interprets/makes sense information and generates environment user's state information consisting of at least one of the user's state information and the environment state information used in the notification-purpose user state managing portion 110. For example, the environment user's state generating portion 142 implements identification processing such as preprocessing, normalization processing, feature extraction processing and clustering etc. onto the sense information in receipt. For example, the environment state information is made by causing the sensor information to undergo processing and, user information is made by causing the interaction information to undergo processing and, thereby, the environment user's state information is made.

An environment user's state accumulating portion 146 accumulates/manages the made environment state information as well as user's state information together with time information.

(Configuration of user interface portion 130)

Subsequently, respective portions configuring the user interface portion 130 will be described.

The notification information display controlling portion 134 presents notification information in accordance with an instruction of the notification executing portion 126. For example, the notification information is notified to a user based on the timing of the information notification inputted from the notification executing portion 126 and the method of information expression in information notification.

A feedback information collecting portion 132 obtains interaction information from a user and inputs it to the information notifying state history accumulating portion 116. In addition, the feedback information collecting portion 132 obtains interface information and inputs it to the information notifying state history accumulating portion 116.

(Processing of whole system)

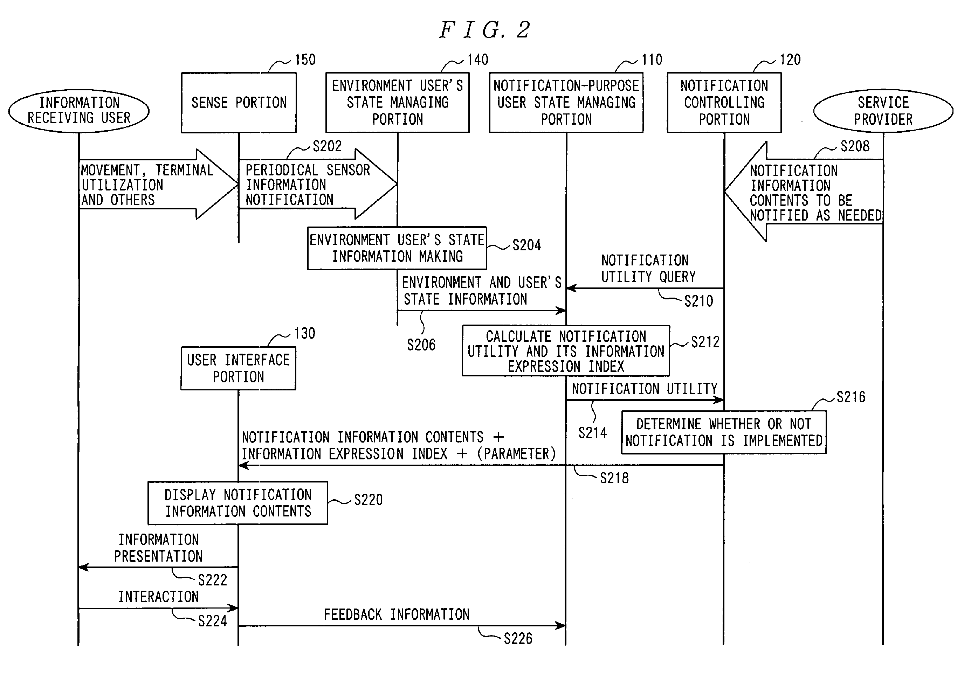

Subsequently, information notification processing of the whole information notification system realized by the information notifying apparatus 100 related to the present embodiment will be described with reference to FIG. 2.

Here, two kinds of information notification processing, that is, an inquiry type processing and event type processing will be described.

(Inquiry type processing)

Firstly, the inquiry type processing will be described with reference to FIG. 2.

As for the inquiry type processing, the notification executing portion 126 makes an inquiry on an expected utility at each time to a user's notification utility deriving portion 114 to implement information notification based on the notified expected utility.

The sensor information receiving portion 144 collects sense information periodically from the sense portion 150 (Step S202) to input it to the environment user's state generating portion 142. The environment user's state generating portion 142 makes the environment user's state information indicating the states of environment and the user (Step S204). The sense information includes information outputted from all devices such as, for example, information display terminal that the user uses and devices embedded into the environment etc. For example, interaction information on the user's information display terminal, sense information of an acceleration sensor and video information from a monitor camera installed in a room etc. is included.

The environment user's state generating portion 142 inputs the made environment user's state information to the user's internal state assuming portion 112 (Step S206).

On the other hand, notification information, for example, contents, that a service provider or information receiving user himself/herself notifies to an information receiving user, is inputted, as needed, to the notification information receiving portion 122 (Step S208). The notification information receiving portion 122 inputs the inputted notification information contents to the notification information accumulating portion 124.

Here, the notification executing portion 126 makes reference to the notification information accumulating portion 124 to make an inquiry on the current expected utility to the user's notification utility deriving portion 114 in case of notification information contents to be notified being present (Step S210).

In the case where an inquiry is present, the user's notification utility deriving portion 114 calculates the expected utility as well as information expression index thereof based on environment user's state information inputted from the environment user's state generating portion 142 to the user's internal state assuming portion 112 (Step S212) to return the expected utility as well as information expression index thereof to the notification executing portion 126 (Step S214).

The notification executing portion 126 determines whether or not to implement notification based on the expected utility in receipt (Step S216). In case of implementing notification, the notification information contents and the information expression index are transmitted to the notification information display controlling portion 134 (Step S218), and then the notification information display controlling portion 134 displays the notification information contents based on the display method that the information expression index indicates (Step S220).

Subject to information display (Step S222), the feedback information collecting portion 132 collects interaction information fed back from the user who received information (Step S224) to input it to the information notifying state history accumulating portion 116 as feedback information (Step S226). Such an arrangement not only enables accumulation of the information notification state history but also enables updates of a model for notification-purpose user state management from those pieces of accumulated information.

(Event type processing)

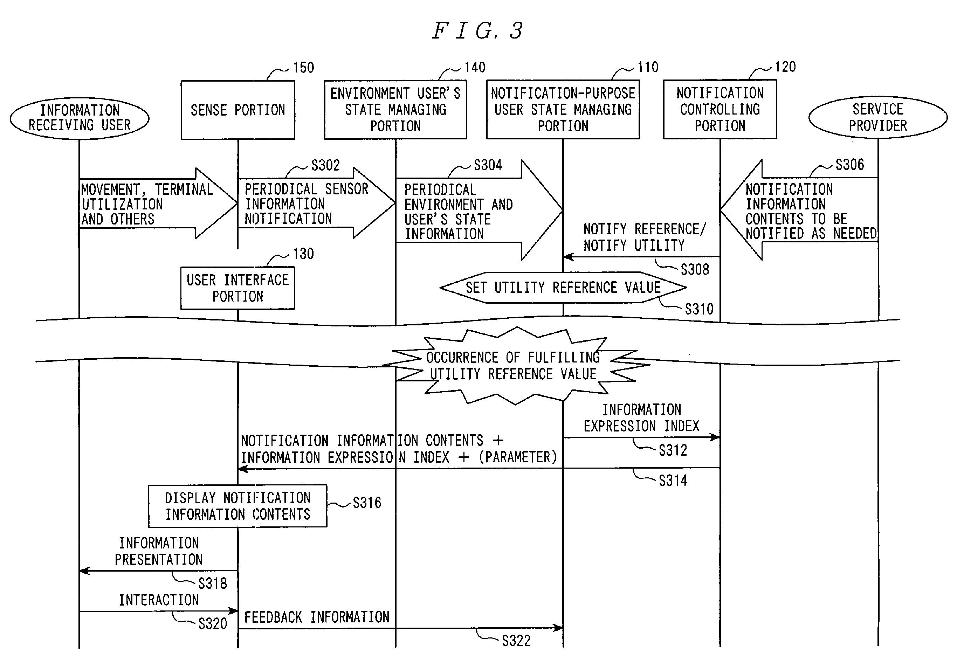

Subsequently, the event type processing will be described with reference to FIG. 3.

In the event type processing, at first, the notification executing portion 126 notifies the user's notification utility deriving portion 114 of a reference of the utility in advance. Subsequently, the user's notification utility deriving portion 114 makes notification to the notification executing portion 126 only in case of the notified reference being fulfilled. Subsequently, the notification executing portion 126 implements information notification based on notification that the reference has been fulfilled.

The event type processing is basically likewise the inquiry type processing, but is different only in trigger portion of information notification. In the inquiry type processing, the user's notification utility deriving portion 114 returns the expected utility corresponding with an inquiry of the notification executing portion 126, and then the notification executing portion 126 implements information notification based on the returned expected utility.

In the event type processing, the notification executing portion 126 notifies the user's notification utility deriving portion 114 of the reference of the utility in advance while the user's notification utility deriving portion 114 calculates the expected utility all the time and monitors the case of fulfilling the reference value. And in the case where a case of fulfilling the reference value occurs, the user's notification utility deriving portion 114 transmits an information expression index to the notification executing portion 126.

The event type processing will be specifically described.

The sensor information receiving portion 144 collects sense information from the sense portion 150 periodically (Step 302) to input it to the environment user's state generating portion 142. The environment user's state generating portion 142 makes environment user's state information of indicating the state of the environment as well as the user to input the made environment user's state information to the user's internal state assuming portion 112 (Step S304).

On the other hand, notification information contents that a service provider or information receiving user himself/herself notifies to an information receiving user are inputted, as needed, to the notification information receiving portion 122 (Step S306). The notification information receiving portion 122 inputs the inputted notification information contents to the notification information accumulating portion 124.

On the other hand, the notification executing portion 126 inputs the reference value of the utility to the user's notification utility deriving portion 114 (step S308). The user's notification utility deriving portion 114 sets the reference value (Step S310), calculates the expected utility all the time and determines whether or not it fulfils the reference value.

In the case where the calculated expected utility fulfils the reference value, the user's notification utility deriving portion 114 inputs the information expression index to the notification executing portion 126 (Step S312).

The notification executing portion 126 transmits the notification information contents and the information expression index to the notification information display controlling portion 134 (Step S314) and then the notification information display controlling portion 134 displays the notification information contents based on the display method that the information expression index indicates (Step S316).

Subject to information display (Step S318), the feedback information collecting portion 132 collects interaction information fed back from the user who received information (Step S320) to input it to the information notifying state history accumulating portion 116 as feedback information (Step S322). Such an arrangement not only enables accumulation of the information notification state history but also enables updates of a model for notification-purpose user state management from those pieces of accumulated information.


(Operations of respective portions of notification controlling portion 120)

Subsequently, operations of respective portions configuring the information notifying apparatus 100 will be described.

At first, operations of respective portions of the notification controlling portion 120 will be described.

The notification information receiving portion 122 receives information from a variety of information sources.

As information sources, E-mails, electronic news, E-mail newsletters, paging distribution systems, text broadcasting on the radio, WWW contents and instant massages (IM) are included. In addition, schedulers that the user himself has registered and to-do lists etc. are included.

As types of information, news (politics, economy, society, culture, sports and weather), film information, gourmet information, traffic information, television programs, stock information, weather, fortune telling, event information, learning information (English word memorizing service), E-mails from acquaintances, contacts from companies, urgency contacts on such as a disaster etc., advertisements, menu services, Forgot and Found service, Lost and Found service, health promotion information and last train information etc. are nominated.

The notification information accumulating portion 124 accumulates/manages information received by the notification information receiving portion 122. In addition, corresponding with an inquiry from the notification executing portion 126, the notification information accumulating portion 124 responds with information in accumulation, the number of pieces of information and meta-information of the accumulated information, for example, valid time information.

The notification executing portion 126 determines whether or not information to be notified to the notification information accumulating portion 124 is present, and in case of the information being present, determines notification based on the expected utility. Here, the notification executing portion 126 determines information to be notified, based on the order of information having been registered by the notification information accumulating portion 124 or the priority corresponding with the contents. For example, information to be notified is determined based on contents of information being notified, for example, levels of importance and urgency.

In the present embodiment, without focusing attention onto the levels of importance and priority corresponding with contents, the case where the order is determined corresponding with valid time of information will be described. Here, the valid time of information is information depending on time being determined objectively such as time of scheduling, time of completing advertisement contents and time indicating freshness of news etc. For the present embodiment, the case where this time information is given as attached (side) information of notification contents as meta-information by a notification contents provider will be described.

The notification executing portion 126 makes an inquiry on the expected utility to the user's notification utility deriving portion 114 so as to determine the derived expected utility with a threshold value and implement notification determination thereby.

In addition, the notification executing portion 126 may input a reference of the expected utility to the user's notification utility deriving portion 114 so that the user's notification utility deriving portion 114 determines whether or not the expected utility fulfills the reference value. In that case, the user's notification utility deriving portion 114 inputs an information expression index to the notification executing portion 126 in case of having determined that the expected utility fulfills the reference value.

In addition, the notification executing portion 126 may be arranged to control information in the amount as large as possible to be conveyed based on the notification information, for example, the information amount of the notification information contents while alleviating user's load.

In addition, the notification executing portion 126 may be arranged to control so as to implement information notification in the user's gazing location based on the user task.

The notification executing portion 126 inputs the notification information contents to the notification information display controlling portion 134 in case of having determined to implement notification based on the expected utility. For example, information such as media types, display locations/sizes, methods of presenting texts and information updating frequency (speed) etc. is inputted as information expression.

(Operations of respective portions of notification-purpose user state managing portion 110)

Subsequently, operations of respective portions configuring the notification-purpose user state managing portion 110 will be described.

The notification-purpose user state managing portion 110 implements management mainly on two elements of "information recognizability" and "task interruption level" to be taken into consideration on information notification. "Information recognizability" refers to a level of a user's perceiving and recognizing contents of information. A "task interruption level" refers to a level of indicating to what extent the work (task) in midst of user's execution is discontinued by information notification. Those two elements are comparatively low elements in information processing process of human beings and their dependency onto information contents is small.

However, they are elements that cannot be observed directly, and therefore are assumed by introducing elements that influence the both elements and can be observed directly, and in consideration of causal relationships with them. Specifically, the user's internal state assuming portion 112 introduces at least one element of the user's operation state element and the task state element to assume the two elements, that is, information recognizability" and "task interruption level" from the introduced elements and information expression elements being control subjects.

There, a Bayesian network (conviction/probability/causal network) suitable for handling events where a lot of uncertain information is present as in case of events, such as user's internal intention, that are not completely observable, weather and events including a lot of noise-mixed signals can be used.

The Bayesian network is a model that expresses qualitative dependency relationship among a plurality of random variables with a graph structure and expresses quantitative relationship between respective variables with the preceding conditioned probability. That is, the Bayesian network is a probability model presented with three of random variable, conditioned dependency relationship among random variables and the conditioned probability thereof. The variables are expressed with nodes and the dependency relationships among variables are expressed with effective links spanning the variables in the direction from a cause to an effect, with a node coming at the tip of the link being called as child node and a node that is present in the base of the link being called as parent node.

The user's internal state assuming portion 112 employs the Bayesian network to manage the dynamic relationship between unobservable elements and observable elements with the random variables between elements and to implement probability prediction on two elements of information recognizability and task discontinuancy. Use of the Bayesian network will enable handling of events inside a user that cannot be completely observed and influence from elements in no consideration, for example, noises etc. uniformly and robustly under statistical and probability technique. In addition, use of Bayesian network enables handling of latent elements that cannot be observed directly and new elements that will come into existence in the future as well.

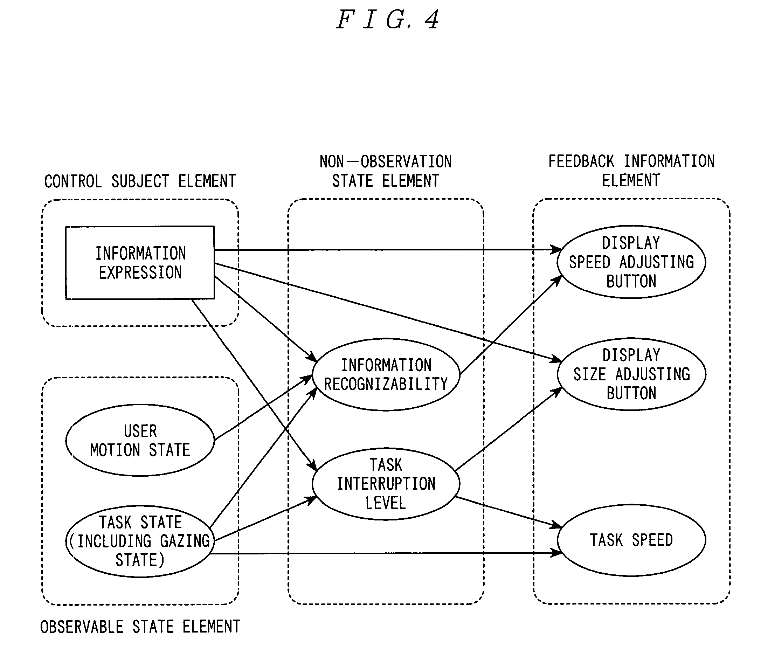

The causal relationship between the two non-observation user's state elements, that is, "information recognizability" as well as "task interruption level" and the other elements is expressed with the Bayesian network. Specifically, for example, the information expression and at least one of the task state on the information display terminal and the user motion state become a cause element to generate a causal network to the information recognizability and the task interruption level. The Bayesian network example is shown in FIG. 4. Therein, the links (arrows) between respective elements are only examples and are dynamically changed corresponding with intensity of the causal relationships.

(Element configuring Bayesian network)

Subsequently, portions configuring the Bayesian network will be described with reference to FIG. 4.

A "user motion state" element is to show the states of user's motions and has values of discrete variables, for example, the states of "staying still", "walking", "running", "ascending the steps" and "descending the steps" etc. As a method of obtaining those gazing state, a method by way of image recognition with an external camera and a method of analyzing information from a wearable sensor etc. are applicable. Those methods are described in, for example, "Multi-Sensor Activity Context Detection for Wearable Computing", Nicky Kern and Bernt Schiele, In European Symposium on Ambient Intelligence(EUSAI), Eindhoven, The Netherlands, November 2003.

A "task state" element shows user's working states on an information display terminal. For example, it has values of discrete variables such as the states of "doing nothing", "watching the information display terminal but doing noting", "web browsing", "editing an E-mail", "dictionary search", "making reference to images", "setting a terminal", "appreciating streaming audio and video" and "making reference to a document" etc. They are obtainable from the OS (Operating System) or application state information on the information display terminal.

Therein, the state of "watching the information display terminal but doing noting" is not obtainable from the OS (Operating System)) or application state information on the information display terminal. Therefore, a method by way of image recognition with an external camera, a method of user's wearing a head mount display (HMD) etc. and a method of analyzing information from a sensor mounted onto the terminal etc. are applicable to a state on whether or not the user's gaze is directed onto the information display terminal, that is, the gazing state.

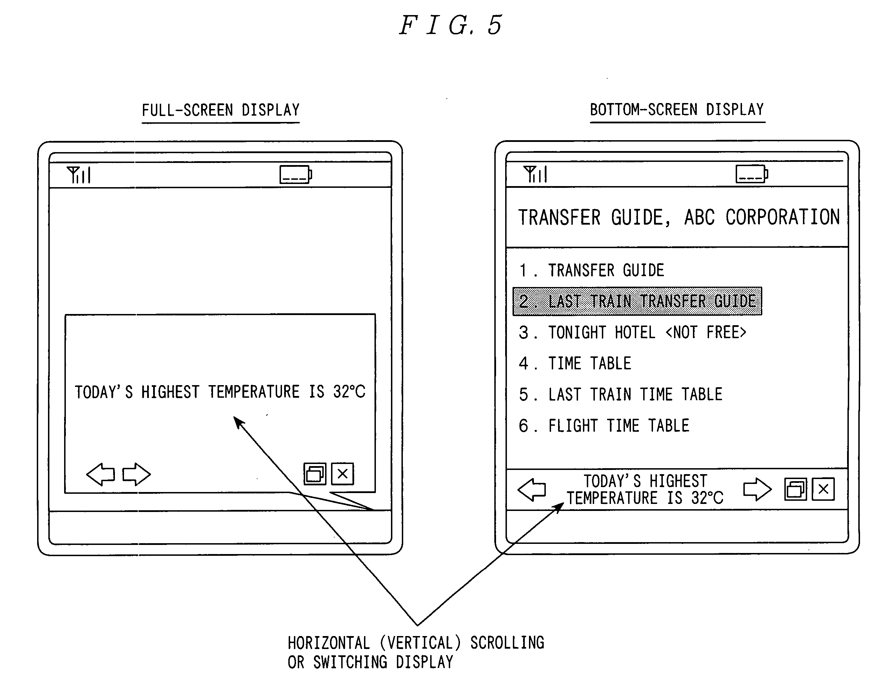

An "information expression" element shows a method of information expression/display on the information display terminal. It represents, for example, media types such as visual media such as texts, animation and moving pictures etc., audio media and vibration media etc. In addition, the text media are classified by display position/size, a method of presenting texts and update frequency (speed) of information. As shown in FIG. 5, the display position/size include, for example, display onto the whole screen, the bottom of the screen and the side of the screen while the presenting method includes scroll display in the horizontal direction or vertical direction and a switching type. In addition, also for scrolling and switching, rapid display and slow display are present as frequency (speed) thereof. They are controlled in a notification information display controlling portion 134 to be described later.

In the case where "user motion state" elements as well as "task state" elements as observable state elements as described above are derived, the user's internal state assuming portion 112 implements probability calculation based on the Bayesian network configured by observable state elements, "information recognizability" elements as well as "task interruption level" elements. This arrangement will enable calculation of probability of the "information recognizability" elements as well as the "task interruption level" elements.

In addition, the user's internal state assuming portion 112 may be arranged to predict that task discontinuancy is comparatively low and information recognition is high in case of having determined that the user is focusing attention to an information display terminal as in the mobile environment in information notification in the real world.

In addition, the user's internal state assuming portion 112 may be arranged to request for task discontinuancy elements as well as information recognition elements based on the state of the user as well as the information display terminal, the state of work (task) that the user is implementing on the information display terminal, and user's proficiency toward those tasks, in addition to the user gazing state onto the information display terminal.

In addition, the user's internal state assuming portion 112 may be arranged to set any value to the "information recognizability" elements as well as the "task interruption level" elements, reverses assumption on at least one of the value of observable states capable of fulfilling them and the combination thereof and implement probability calculation of the "information recognizability " elements as well as the "task interruption level" elements according to whether or not the value derived through the reversed assumption matches with the observable state elements.

There, as for learning with model parameter assumption for making those structure models, it is necessary to learn off-line in advance. In addition, it is possible to learn on-line. The latter will be described later. Off-line learning is realized by bringing such a circumstance out that will give rise to the whole combinations of discrete variables which the element constituting models can take and observing objective information. The model structures are determined with, for example, AIC (Akaike's information criterion), MDL (Minimum description length) and BIC (Bayesian information criterion).

(Processing of the user's notification utility deriving portion 114)

Subsequently, user's notification utility deriving portion 114 will be described.

The user's notification utility deriving portion 114 calculates an expected utility expected at the time of notifying a user of information at the applicable timing from probability of information recognizability elements and probability of task interruption level elements. The user's notification utility deriving portion 114 may be arranged to provide the expected utility of respective points of time corresponding with requests form the notification executing portion 126 (inquiry type method) and may be arranged to provide, in the case where a conditional formula given in advance such as a reference value, for example, is fulfilled, the information that a reference value is fulfilled (event type method).

In the present embodiment, the case where a valid time of information is provided in advance as delivery timing information of notification information by the information provider in deriving the expected utility will be described. For example, it is the conclusion time in case of information on sales, the meeting time in case of information on meeting and the time of the Lost and Found moment in case of telling that something has been dropped. In addition, an information amount (length) is also obtainable from the description of the delivery timing information or by parsing the delivery timing information.

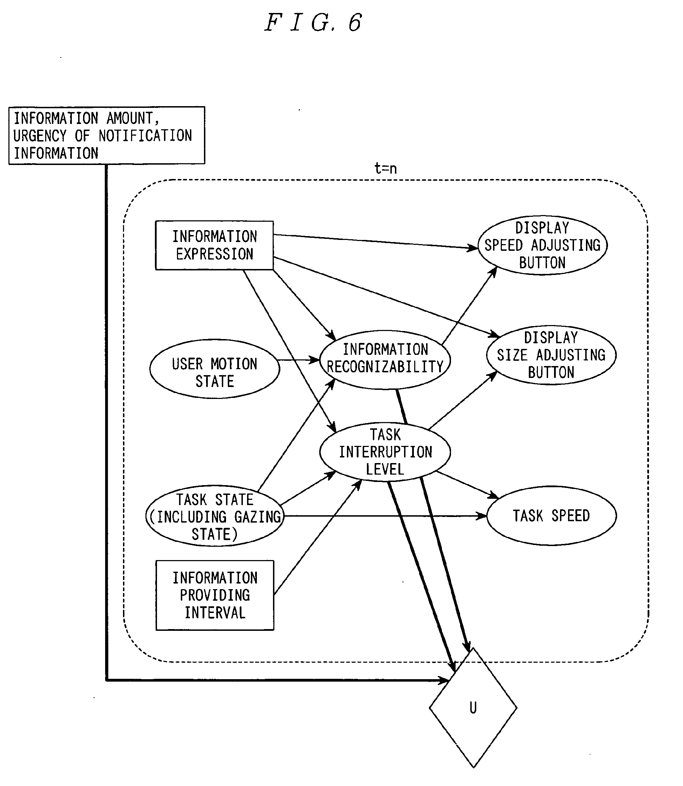

Subsequently, an example of deriving method of deriving the expected utility from the delivery timing information and the above described two elements, that is, the "information recognizability " elements and the "task interruption level" elements, will be described with reference to FIG. 6.

Specifically, probability of information recognizability is defined to be $P(InfoRec|E)$ (where, InfoRec belongs to {infoRecHigh,InfoRecLow}), probability of task interruption level is defined to be $P(Inter|E)$ (where, Inter belongs to {InterHigh,Interlow}), the utility given by the information recognizability is defined to be $U(InfoRec)$ and the utility given by the task discontiuancy is defined to be $U(Inter)$.

Thereby, the expected utility (EU: Expected Utility) is given by the following Formula (1). There, E represents consolidation of evidence being observable at the time of implementing information notification, E={information expression, task state, user motion state}={InfoRep,Task,Motion}. Therefore, to be exact, $P(InfoRec|E)$ is $P(InfoRec|InfoRep, Task,Motion)$ and $P(Inter|InfoRep,Task,Motion)$. There, $W_{infoRec}$ and $W_{inter}$ are respectively weighted coefficients for the information recognizability and the task interruption level.

$$EU(InfoRec, Inter) = W_{InfoRec} \times \sum_{InfoRec \in \{InfoRecHigh, InfoRecLow\}} P(InfoRec|E)U(InfoRec)$$
$$+ W_{Inter} \times \sum_{Inter \in \{InterHigh, InterLow\}} P(Inter|E)U(Inter) \quad (1)$$

As follows, reference character t denotes the time index and reference character m denotes notification information presented at the time of the time index t. In that case, at the time of t=t+1, notification information of m+1 is notified.

(Specific example of expected utility)

Subsequently, an example of an expected utility EU will be described.

Information recognition sensitivity InfoRecSensitivity(InfoRec) corresponding with the information recognizability InfoRec (where, InfoRec belongs to {infoRecHigh,InfoRecLow}), task load TaskLoad(Inter) corresponding with the task interruption level Inter (where, Inter belongs to {InterHigh,Interlow}), information amount InfoLength(m)[bytes] of the notification information m, and the display time $T_{display}(m)$ of the notification information m is defined. There, InfoRecSensitivity(InfoRec) is taken as recognition information processing speed per unit time, and the unit will be [byte/sec] for example. In addition, W(m,t) is a weight determined according to the present time Time, and, for example, the higher the stress level is, the higher it will become, and, for example, a decreasing function with the time t is defined.

From the above, a utility $U(InfoRec)$ given by information recognizability as well as a utility $U(Inter)$ given by task discontinuancy is calculated with the following equations. There, $T_{fullrec}(m)$ is time required for all the m-th notification information being recognized, and in case of presenting time $T(m)$ being not less than $T_{fullrec}(m)$, $U(InfoRec)$ will become equal to the information amount as all the information is to be recognized. That is, $U(InfoRec)$ indicates information amounts that can be notified within the time being monitored.

Therefore, Equation (2) as well as Equation (3) is valid.

$$U(InfoRec,m)=InfoRecSensitivity(InfoRec) \times T(m) \text{ (if } T_{fullrec}(m) > T(m)) \quad (2)$$

$$U(InfoRec,m)=InfoLength(m) \text{ (if } T_{fullrec}(m) \leq T(m)) \quad (3)$$

where, $T_{fullrec}=InfoLength(m)/InfoRecSensitivity(InfoRec(m))$

In addition, $U(Inter)$ is expressed with Equation (4). There, $U(Inter)$ clarifies to what extent the information processing speed of the main task gets slow with information notification by being multiplied with the weight of task importance, wherein TaskLoad (Inter) is a task load increasing rate of increasing with notification, ProcessSpeed (MainTask) is user's information processing speed in case of implementing the main task (MainTask) and TI (Task Importance) is importance level of the main task (MainTask). That is, U (Inter) indicates information processing amount of the main task within the time when monitoring is taking place.

$$U(Inter,m)=(ProcessSpeed(MainTask)/TaskLoad(Inter))\times TI(Maintask) \quad (4)$$

The user's notification utility deriving portion 114 calculates an expected utility so that the total sum of the information amount that can be notified within the time when monitoring is taking place and the information processing amount of the main task for that period become maximum.

Moreover, in the case where the information importance level (inclusive of stress level etc.) of the notification information m, W(m,Time), is defined, U(InforRec,m) is expressed with W(m,Time) as in the following Equation (5) as well as Equation (6).

$$U(InfoRec,m)=InfoRecSensitivity(InfoRec)\times T(m)\times W(m,Time)$$

$$(if\ T_{fullrec}(m)>T(m)) \quad (5)$$

$$U(InfoRec,m)=InfoLength(m)\times W(m,Time)\ (if\ T_{fullrec}(m)\leq T(m)) \quad (6)$$

On the other hand, it is possible to determine the EU value in consideration on notification information m that is intended to be provided presently (t=t) but also notification information (m) to be predicted to be notified with at least one of notification information (m-1) of the past (t=t-1) and the future (t=m; m>0). For example, a utility consisting of components of the present "information recognition" elements as well as "task discontinuance" elements and "information recognition" elements as well as "task discontinuance" elements a predetermined time ago is calculated. In that case, a utility with information provision at each point of time is derived.

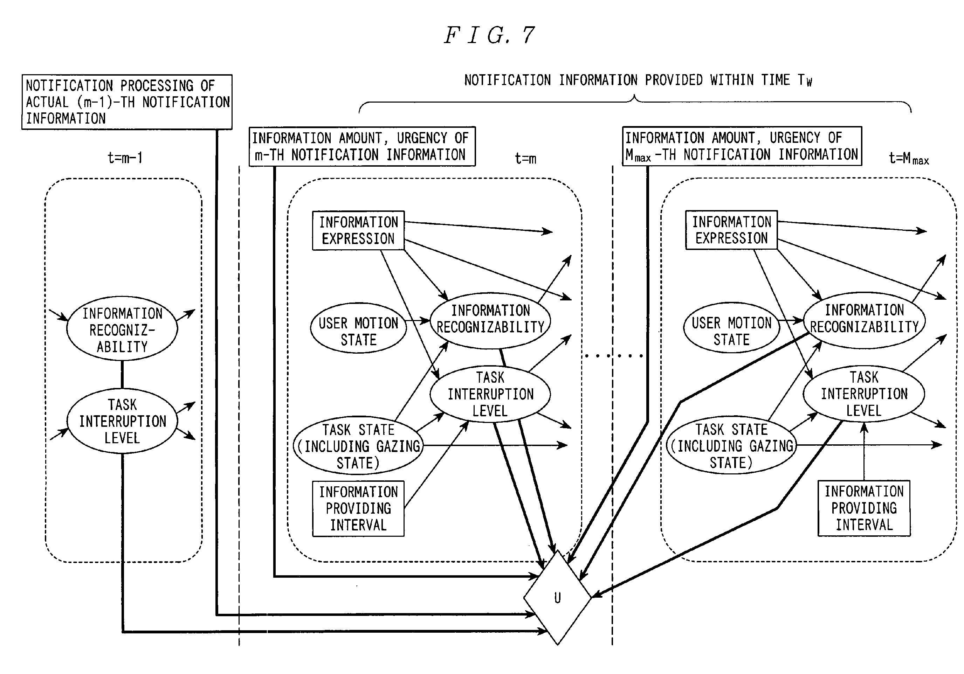

Conceptual diagram in case of determining the EU value in consideration of notification information (m-1) in the past (t=t-1) as well as notification information (m) being predicted to be notified in the future (t=m; m>o) is shown in FIG. 7.

There, if an index of notification information providable within the future time window $T_w$ in consideration (for example, 1 minute or 30 seconds) can be expressed with m, m falls within the range of $0\leq m\leq M_{max}$. There, $M_{max}$ is a maximum integer fulfilling the following Equation (7).

$$\sum_{M=0}^{M\ max} T(m) \leq T_w \quad (7)$$

With the above described $M_{max}$, the EU can be derived as shown in Equation (8). In Equation (8), the first item in the right is a utility on the preceding provision information, the second item is a utility on notification information being presently intended for provision and the last item is a utility with $M_{max}$ pieces of notification information being provided within the time $T_w$ from the present time point. The EU will be a sum of these utilities.

$$EU(\text{InfoRec}, Inter) = EU_{m-1}(Info(m-1), Inter(m-1)) +$$

$$EU_m(Info(m), Inter(m)) + \sum_{m=m+1}^{M_{max}} EU_m(Info(m), Inter(m)) \quad (8)$$

There, since $EU_{m-1}$ is information having already been provided, P(InfoRec|E) is 1 and since InfoRec has been determined, $EU_{m-1}$ is calculated with the above described equation, U(InfoRec,m-1) with a lapse of time T(m-1) from time indicated by the time index at the time of notification t=t-1 to time indicated by the present time index t.

On the other hand, since $EU_m$ is a prediction value, P(InfoRec|E) is derived in appreciation that the observation elements to be utilized in the Bayesian network shall succeed the state of the present time. In addition, P(Inter|E) is predicted with the provision time T(m), that is a parameter, for use as well. However, without being limited to the above described method of deriving the expected utility, another method may be used.

On the other hand, as described above, it is possible to determine the utility with not only calculation of EU from U and probability P but also with comparison with prior probability P(Inter) and P(InfoRec). For example, there is a method of calculating the utility from U(InfoRec) and P(InfoRec|E) with comparison with P(Inter) and P(Inter|E). That realizes controlling that no notification will take place when the assumed task interruption level is higher than the prior probability.

$$EU(\text{InfoRec}, Inter) = \sum_{\text{InfoRec} \in \{\text{InfoRecHigh}, \text{InfoRecLow}\}} P(\text{InfoRec}|E)U(\text{InfoRec})$$

$$if \ P(Inter|E) < P(Inter) \quad (9)$$

$$EU(\text{InfoRec}, Inter) = 0$$

$$if \ P(Inter|E) > P(Inter) \quad (10)$$

Otherwise, calculation from proportion of P(Inter) to P(Inter|E) is also feasible.

The user's notification utility deriving portion 114 notifies the maximum expected utility (MEU), that is the maximum value of the expected utility derived from the above described calculation formula, to the notification executing portion 126. The maximum expected utility is calculated with the following Equation (11).

$$MEU = \max_{\text{InfoRec,Inter}} EU(\text{InfoRec, Inter}) \quad (11)$$

In case of considering the past as well as future EU, each T(m) can be determined based on the maximum MEU within the time $T_w$ being determined with Lagrange's method of undetermined multipliers with presenting time T (m) within the range of $0 \leq m \leq M_{max}$ as parameter.

In addition, the expected utility on information notification of each time may be arranged to be derived from utility function with "information recognizability" elements as well as "task interruption level" elements as variable assumed from the Bayesian network.

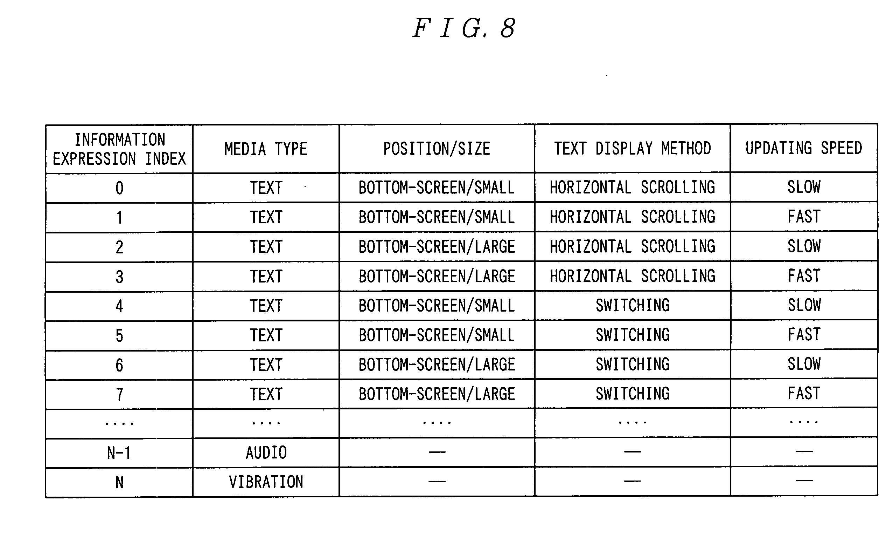

Subject to calculation of the expected utility, the user's notification utility deriving portion 114 transmits the maximum value MEU thereof and the index of the information expression method of giving that maximum value to the notification executing portion 126. An example of the information expression index information that the user's notification utility deriving portion 114 transmits is shown in FIG. 8.

In the information expression index table, media type, position/size, text display method as well as update speed and the like are described on an information expression index basis.

The notification executing portion 126 compares the maximum notification utility in receipt with a threshold value $MEU_{th}$ to determine whether or not to implement transmission. In case of transmission, the notification information and the information expression index information is transmitted to the notification information display controlling portion 134.

The threshold value $MEU_{th}$ can be determined statically in advance or based on the past history. For example, from combination of {information expression, task state, user motion state} information in case of having provided information in the past, feedback state information {display speed adjusting operation, display size adjusting operation, task speed} information, P(InfoRec|InfoRep, Task, Motion, SpeedAdapt, SizeAdapt, TaskSpeed) and P(Inter|InfoRep, Task, Motion, SpeedAdapt, SizeAdapt, TaskSpeed) being {information recognizability, task interruption level} can be derived. And, the EU is calculated therefrom so that the EU at the time when information was provided in the past is derived and accumulated. Such an arrangement can derive an optimum $MEU_{th}$.

(Specific calculation example)

Subsequently, a specific example of calculation will be shown.

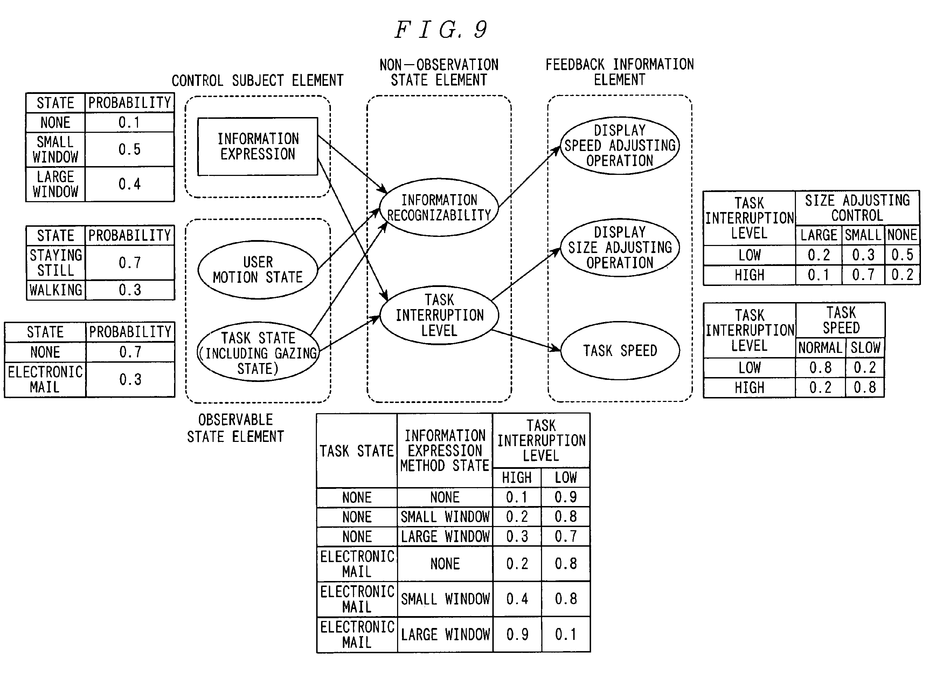

In calculation, a conditional probability table (CPT) representing a relationship between the Bayesian network structure and each element is required. Here, a calculation example in case of those elements being provided as in FIG. 9 will be shown. There, in order to show an example of a calculation result, several links have been deleted among the structure in FIG. 4. In addition, the discrete variables for each element are limited in order to simplify the calculation example.

The probability P (Iner|Rep,Task), in "task interruption level=high" priorto information notification, for information expression at the time when the user states and the task states are given can be obtained with reference to conditional probability table to the task interruption level. For example, the case of "information expression method=small window" and "task state=electronic mail can derive the probability of "task interruption level" P(InerHigh|RepSWindow, TaskEmail) =0.4 and P(InterLow|RepSWindow, TaskEmail)=0.6.

Likewise, reference to the conditional probability table to the information recognition elements (not shown in the drawing) can derive, for example, the probability of' information recognizability" P(InfoRecHigh|RepSWindow, MotionWalking, TaskEmail)=0.2 and P(InfoRecLow|RepSWindow, MotionWalking, TaskEmail)=0.8.

There, the case of definitions with U(InfoRecHigh)=0.8, U(InfoRecLow)=0.2, U(InterHigh)=-0.8 and U(InterLow) =-0.4 will result in the following calculation.

$$EU=(0.2\times0.8+0.8\times0.2)+\{0.4\times(-0.8)+0.6\times(-0.4)\}=-0.24$$

Based on the above described calculation, the EU is calculated on all the above described expression methods so that the MEU can be calculated.

Moreover, as described above, determination is also feasible in comparison with the prior probability P(Inter). For example, P(Inter) can be calculated as follows.

$$P(\text{InterHigh}) = \sum_{Task}\sum_{Rep} P(\text{InterHigh}|Task, Rep)P(Task)P(Rep)$$

$$=P(\text{InterHigh|TaskNothing,RepNothing})P(\text{TaskNothing})P(\text{RepNothing})$$

$$+P(\text{InterHigh|TaskNothing,RepSWindow})P(\text{TaskNothing})P(\text{RepSWindow})$$

$$+P(\text{interHigh|TaskNothing,RepLWindow})P(\text{TaskNothing})P(\text{RepLWindow})$$

$$+P(\text{InterHigh|TaskMail,RepNothing})P(\text{TaskMail})P(\text{RepNothing})$$

$$+P(\text{InterHigh|TaskMail,RepSWindow})P(\text{TaskMail})P(\text{RepSWindow})$$

$$+P(\text{InterHigh|TaskMail,RepLWindow})P(\text{TaskMail})P(\text{RepLWindow})$$

$$=0.1\times0.7\times0.1+0.2\times0.7\times0.5+0.3\times0.7\times0.4$$

$$+0.2\times0.3\times0.1+0.4\times0.3\times0.5+0.9\times0.3\times0.4$$

$$=0.334$$

As described above, P(InterHigh|RepSWindow, TaskEmail)>P(InterHigh) can derive calculation of EU=0.

Subsequently, a method of determining the threshold value $\text{MEU}_{th}$ will be described based on posterior probability assumption.

For example, in case of information notification to a user in states of "information expression=small window" and "task state=electronic mail", the threshold value condition is deemed that the speed of the primary task (electronic mail there) as user reaction gets slow (that is, "task speed=slow") but there is no adjustment onto buttons for changing sizes (that is, "size adjustment=none"). There, the posterior probability P(InterHigh|TaskMail, RepSWindow, TaskSpeedSlow, SizeAdaptNothing) of "task interruption level=high" is derived as follows from the past example in case of having given rise to combinations as described above.

At first, simultaneous probability of those elements can be expressed with the following Equation (14).

$$P(\text{InterHigh, TaskMail, RepSWindow, TaskSpeedSlow, SizeAdaptNothing})$$
$$=P(\text{InterHigh}|\text{TaskMail, RepSWindow, TaskSpeedSlow, SizeAdaptNothing})$$
$$(P(\text{TaskMail, RepSWindow, TaskSpeedSlow, SizeAdaptNothing}) \quad (14)$$

On the other hand, likewise, it can also expressed as in the following Equation (15).

$$P(\text{InterHigh, TaskMail, RepSWindow, TaskSpeedSlow, SizeAdaptNothing})$$
$$=P(\text{TaskSpeedSlow}|\text{InterHigh})(P(\text{SizeAdaptNothing}|\text{InterHigh})(P(\text{InterHigh}|$$
$$\text{TaskMail, RepSWindow})(P(\text{TaskMail})(P(\text{RepSWindow}) \quad (15)$$

Accordingly, the probability to be derived can be derived with the Bayesian theorem as in the following Equation (16).

$$P(\text{InterHigh}|\text{TaskMail, RepSWindow, TaskSpeedSlow, SizeAdaptNothing})$$
$$=P(\text{TaskSpeedSlow}|\text{InterHigh})(P(\text{SizeAdaptNothing}|\text{InterHigh})(P(\text{InterHigh}|\text{Task}$$
$$\text{Mail,RepSWindow})(P(\text{TaskMail})(P(\text{RepSWindow})/P(\text{TaskMail,RepSWindow,Ta}$$
$$\text{skSpeedSlow, SizeAdaptNothing}) \quad (16)$$

There, the following can be calculated.

$$P(\text{TaskSpeedSlow}|\text{InterHigh})(P(\text{SizeAdaptNothing}|\text{InterHigh})(P(\text{InterHigh}|\text{TaskM}$$

$$\text{ail,RepSWindow})(P(\text{TaskMail})(P(\text{RepSWindow})$$
$$=0.8(0.2(0.4(0.5(0.3=0.0096$$

On the other hand, P(TaskMail, RepSWindow, TaskSpeedSlow, SizeAdaptNothing) can be calculated as follows.

P(TaskMail, RepSWindow, TaskSpeedSlow, SizeAdaptNothing)

$$= \sum_{Inter\in\{High,Low\}} P(TaskSpeedSlow|Inter) \times P(SizeAdaptNothing|Inter)$$
$$\times P(Inter|TaskMail, RepSWindow) \times P(TaskMail) \times P(RepSWindow)$$

=P(TaskSpeedSlow|InterHigh)×P(SizeAdaptNothing|InterHigh)×P(InterHigh|TaskMail,RepSWindow)×P(TaskMail)×P(RepSWindow)+P(TaskSpeedSlow|InterLow)(P(SizeAdaptNothing|InterLow)(P(InterLow|TaskMail,RepSWindow)(P(TaskMail)(P(RepSWindow)

=0.8(0.2(0.4(0.5(0.3+0.2(0.5(0.6(0.5(0.3

=0.0186

As described above, the value to be derived can be calculated as follows.

P(InterHigh|TaskMail, RepSWindow, TaskSpeedSlow, SizeAdaptNothing)

=0.0096/(0.0096+0.009)=0.516129

The method of calculation as described above can calculate the posterior probability P(InterHigh|TaskMail, RepSWindow, TaskSpeedSlow, SizeAdaptNothing), then from the maximum value or the average value in the history thereof the threshold value MEUth is determined.

As described above, in case of the Bayesian network as in FIG. 9 having been given, the expected utility EU can be calculated.

(Configuration example of notification information display controlling portion 134)

Subsequently, a notification information display controlling portion 134 will be described. The notification information display controlling portion 134 actually presents information onto an information display terminal with notification information in receipt from a notification executing portion 126, for example, notification information contents as well as information expression index. The notification information display controlling portion 134 has user interface capability that can display notification information and controls display locations/sizes, methods of presenting texts and information updating frequency (speed). The interface can undergo user's adjustment on timing in information notification and expression methods.

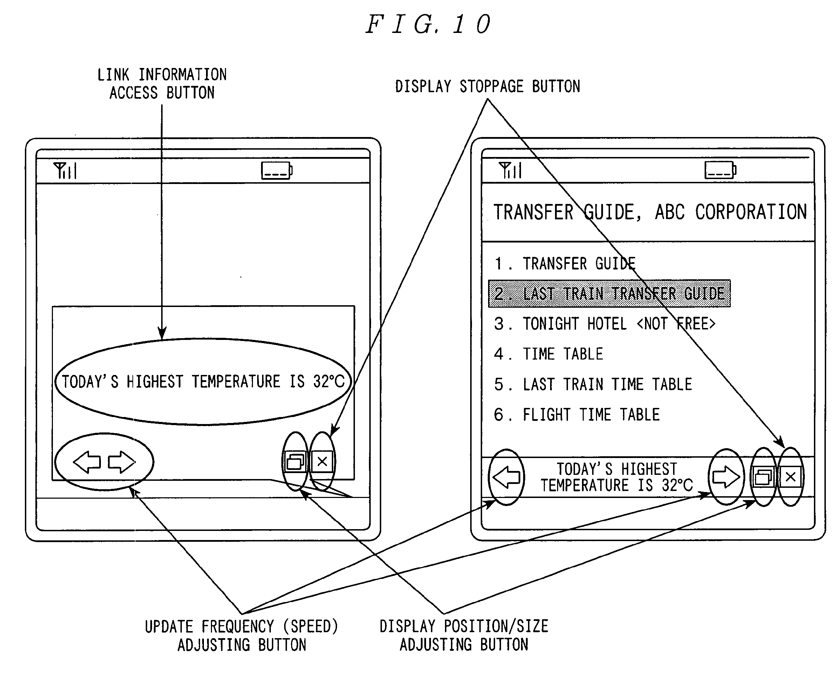

Moreover, the notification information display controlling portion 134 can accept interaction from the user and, for example, has a display position/size changeable button, a display update frequency (speed) changeable button and a button of halting display itself etc. as shown in FIG. 10 so as to be capable of taking case of user's preference. In addition, by clicking the information itself, an access to link information is feasible as well.

(Configuration example of feedback information collecting portion 132)

Subsequently, a feedback information collecting portion 132 will be described.

The feedback information collecting portion 132 acquires user's interaction information onto buttons in possession of the notification information display controlling portion 134 to notify it to the information notifying state history accumulating portion 116 as feedback information.

Moreover, the feedback information includes the task execution speed in addition to the display speed adjusting operation and the display size adjusting operation and the feedback information collecting portion 132 measures this task execution speed. The feedback information collecting portion 132 measures the button operation speed up to the commencement of respective kinds of applications, letter input speed at the time of mail editing and browsing speed at the time of Web reference, obtains unspecified feedback information, for example changes in task speed on an information display terminal that a user has already been implementing at the time of information notification and brings it into feedback. Feedback of those pieces of information will enable the user's state model updating portion 115 to update relationships between the above described task state and information recognizability elements as well as task interruption level elements. In addition, the feedback information collecting portion 132 measures operation speed onto other tasks on the information display terminal also in the case where information is on the screen or the information is not on the screen to make notification to the information notifying state history accumulating portion 116.

What should be cautioned there is that the feedback information collecting portion 132 collects only feedback information through buttons in the interface corresponding with the notification information display controlling portion 134. In contrast, the applications on the screen simultaneously with the user interface portion 130, for example, user interaction such as interaction and the like with a mail client is collected from the sense portion 150. There, a certain particular application interaction information designated by the feedback information collecting portion 132 in order for model updating is collected by the feedback information collecting portion 132.

The information notifying state history accumulating portion 116 accumulates the notified interaction information. And those pieces of information are used for notification control for updating user state models and improving model accuracy.

The information notifying state history accumulating portion 116 accumulates/manages the history of the states of the elements configuring the model at the time when information notification (corresponding to snapshots) was implemented. The information notifying state history accumulating portion 116 may be arranged to accumulate and manage as a table all the combinations of variable values of all the elements configuring the model and that feedback information in the case where a combination in a certain particular state in a case where information notification has been implemented or also in the case where no information notification is implemented.

In addition, the feedback information collecting portion 132 may be arranged to notify, to the information notifying state history accumulating portion 116, information related to the notification information having already been notified last time or a plurality of times ago and information recognition in case of having notified those pieces of notification information as feedback information. Such an arrangement enables the user's state model updating portion 115 to update a state model based on information related to information recognition and therefore enables notification of information based on the present information recognition. For example, information amounts that can be notified to a user can be controlled to become abundant.

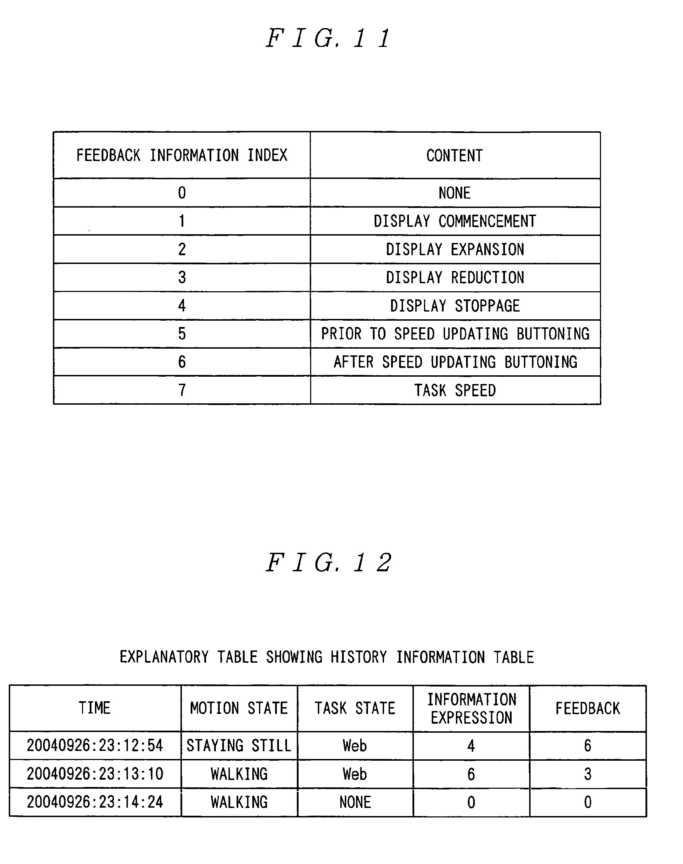

There, display time in the notification information display controlling portion 134 in the case where information notification has taken place or not and in case of occurrence, including the case where information notification has been implemented or the case of lacking such implementation, as well as feedback information index as shown in FIG. 11 for them are inputted to the information notifying state history accumulating portion 116 from the feedback information collecting portion 132. In addition, environment user's state information matching with that display time information is inputted from an environment user's state accumulating portion 146. The information notifying state history accumulating portion 116 manages the inputted historical information. However, since "information recognizability" and "task interruption level" cannot be observed directly therein, "information recognizability" and "task interruption level" are assumed from {information expression, task state, user motion state} information having been observed at the time of having provided information, feedback state information {display speed adjusting operation, display size adjusting operation, task speed} information. For example, the assumption can be implemented by calculation with the method having been described in the item of deriving the above described threshold value MEUth. Now, a table example of the historical information is shown in FIG. 12. For the historical information, for points of time, motion states, task states, information expressions and feedback are described.

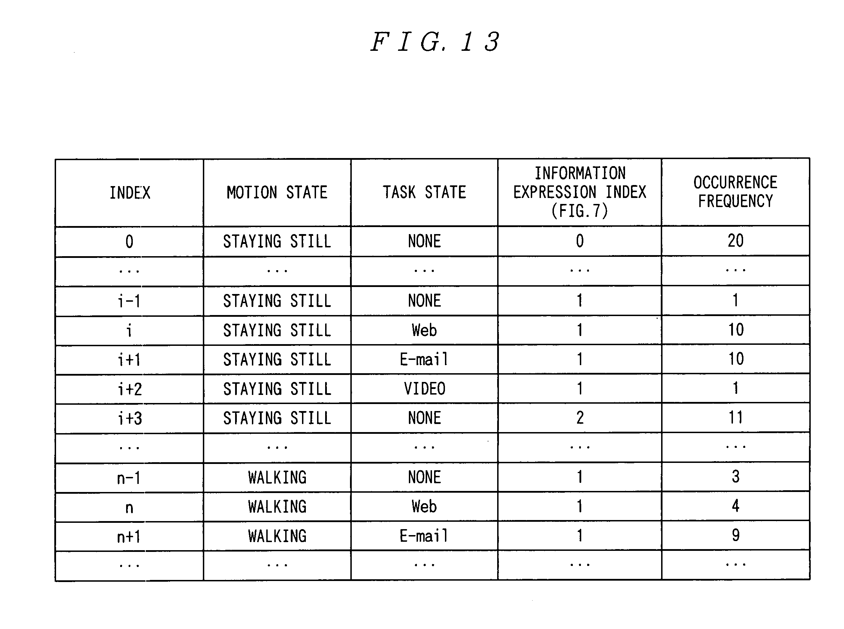

Moreover, combinations of all the environments with the user's states may be retained as a table in advance so that the occurrence frequency is counted. An example of a table showing the occurrence frequency in that case is shown in FIG. 13. In the occurrence frequency table, motion states, task states, information expression index and occurrence frequency on an index basis are described.

(Model updating processing)

Subsequently, model updating processing will be described.

Regardless whether information has been notified or not, model updating is implemented with feedback information etc. obtainable from users in order to improve accuracy of the model. That is, off-line initial teacher data can be realized in learning training data, but they are only reference data for training and therefore a model generated therefrom cannot help being referred to as an initial model. Therefore, it is necessary to improve accuracy in the model with utilization of the present information notification system. What realizes that processing is user's state model updating portion 115.

The user's state model updating portion 115 derives probability variables between respective elements based on the data accumulated in the information notifying state history accumulating portion 116 to update the model structure. For example, the user's state model updating portion 115 updates the model structure each time when new information is added to the information notifying state history accumulating portion 116 or each time when a certain constant pieces of new information are accumulated. For realization thereof, processing likewise the case where a model is made with the training data is implemented.

In addition, the user's state model updating portion 115 may be arranged to dynamically change (learn) the whole structure on the relationships between the state elements based on the data accumulated in the information notifying state history accumulating portion 116.

As described above, based on information notification and specified or unspecified feedback information thereon from the user, the above described Bayesian network can be updated dynamically and the user's state model can be updated. Thereby, adaptation to respective users (personalization) will become feasible.

However, according to determination of the notification executing portion 126, it is difficult to obtain historical information on all the combinations that elements configuring the user's state model can take only from realization of adaptive information notification. Accordingly, it is difficult to lead the above described causal relationship between elements precisely and to derive a more suitable model structure, and consequently, it is necessary to improve expression accuracy of the model itself.

Under the circumstances, focusing attention onto proactive improvement in accuracy of expression capability of the user's state model as an object, information notification is implemented proactively in the case where a combination other than the combinations having occurred in the past has occurred. Specifically, the model accuracy improving notification controlling portion 118 makes an inquiry to the information notifying state history accumulating portion 116 that manages the past information notification history so as to detect combination states with little occurrence frequency. And environment user's state information inputted from the environment user's state generating portion 142 is monitored so that a request of information notification is notified to the notification executing portion 126 in the case where that combination has occurred.

That is, combinations of respective state elements that were observed in the past are managed so as to cause the combined events with little frequency to be controlled to occur proactively. Such an arrangement can construct more accurate inter-element relationship structure.

Hereunder, the present notification processing is referred to as "state combined event type information notification processing" in determination from the above described two processing, that is, the inquiry type processing and event type processing.

On the other hand, the model accuracy improving notification controlling portion 118 acquires combined index information with low occurrence frequency regularly from the information notifying state history accumulating portion 116. And matching processing with information from the environment user's state generating portion 142 is implemented and in case of matching, an information notification request with that information expression index information having been attached thereto is transmitted to the notification executing portion 126.

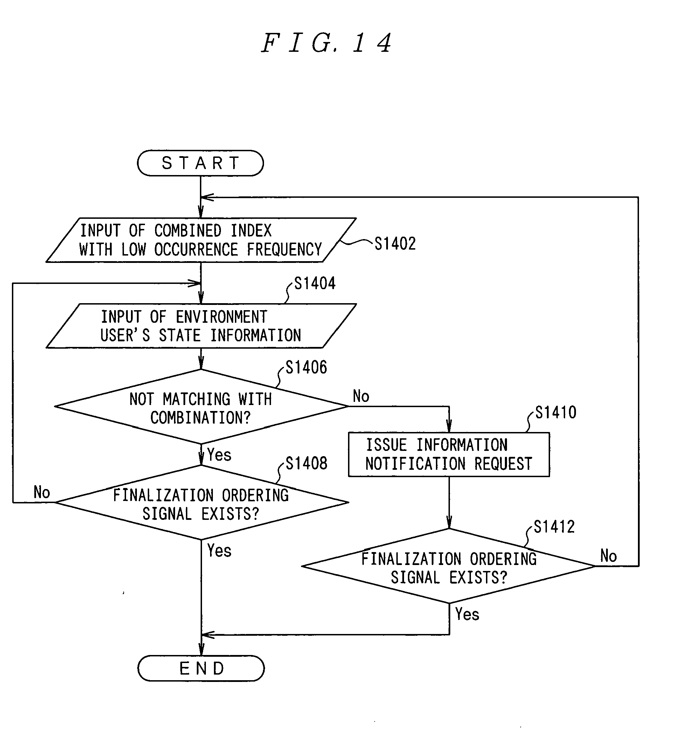

Processing in the above described model accuracy improving notification controlling portion 118 will be described with reference to FIG. 14.

At first, the model accuracy improving notification controlling portion 118 acquires combined index information with low occurrence frequency from information notifying state history accumulating portion 116 (Step S1402).

Subsequently, the model accuracy improving notification controlling portion 118 acquires environment user's state information from the environment user's state generating portion 142 (Step S1404).

Subsequently, the acquired environment user's state information and the combined index information with low occurrence frequency are brought into matching processing (Step S1406).

In the case where the environment user's state information does not match with the combined index information with low occurrence frequency (Step S1406: YES), the model accuracy improving notification controlling portion 118 determines whether or not a finalization ordering signal is present in the environment user's state information (Step S1408). In the case where a finalization ordering signal is present (Step S1408: YES), the step comes to an end. On the other hand, in the case where no finalization ordering signal is present (Step S1408: NO), the step returns to Step S1404.

On the other hand, in the case where the environment user's state information matches with the combined index information with low occurrence frequency (Step S1406: NO), the model accuracy improving notification controlling portion 118 issues an information notification request (Step S1410). Subsequently, the model accuracy improving notification controlling portion 118 determines whether or not a finalization ordering signal is present in the environment user's state information (Step S1412). In the case where a finalization ordering signal is present (Step S1412: YES), the step comes to an end. On the other hand, in the case where no finalization ordering signal is present (Step S1412: NO), the step returns to Step S1402.

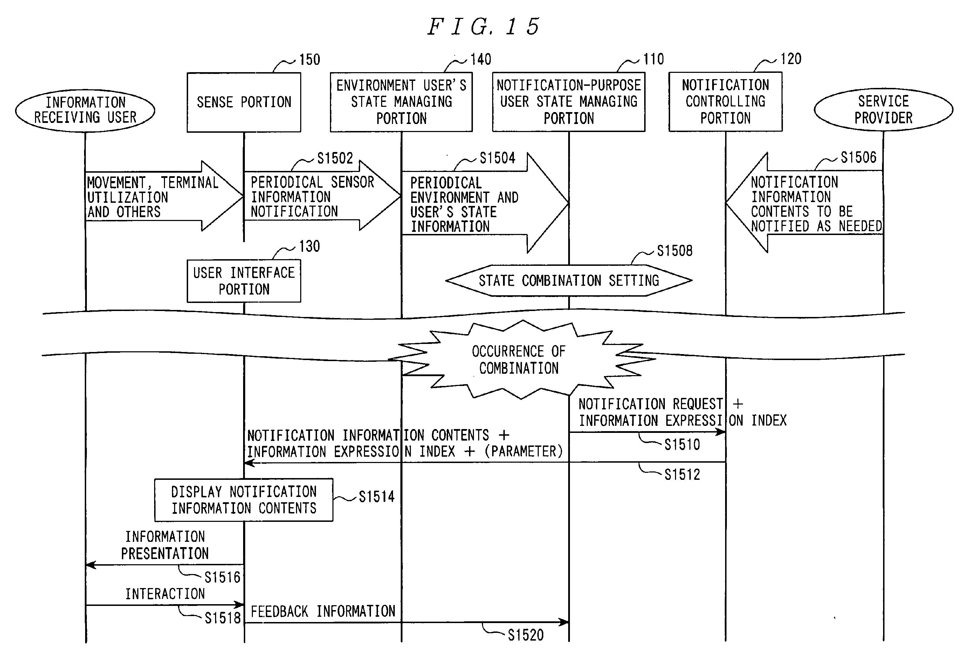

Subsequently, state combined event type information notification processing will be described with reference to FIG. 15.

The sensor information receiving portion 144 collects sensor information periodically from the sense portion 150 (Step S1502) to input it to the environment user's state generating portion 142. The environment user's state generating portion 142 makes the environment user's state information of indicating the states of environment and the user, and inputs the made environment user's state information to the model accuracy improving notification controlling portion 118 (Step S1504).

On the other hand, contents of information, that a service provider or information receiving user himself notifies to an information receiving user, is inputted, as needed, to the notification information receiving portion 122 (Step S1506). The notification information receiving portion 122 inputs the contents of the inputted information to the notification information accumulating portion 124.

There, the model accuracy improving notification controlling portion 118 acquires and sets combined index information with low occurrence frequency regularly from the information notifying state history accumulating portion 116 (Step S1508). In addition, the model accuracy improving notification controlling portion 118 compares the environment user's state information inputted from the environment user's state generating portion 142 and the combined index information with low occurrence frequency into matching processing to determine whether or not there is any matching.

In the case where the combination with low occurrence frequency matches with the environment user's state information, the model accuracy improving notification controlling portion 118 transmits an information notification request with that information expression index information having been attached thereto to the notification executing portion 126 (Step S1510).

The notification executing portion 126 transmits the notification information contents and the information expression index to the notification information display controlling portion 134 (Step S1512) while the notification information display controlling portion 134 displays information contents based on a display method that the information expression index indicates (Step S1514). Subject to information display (Step S1516), the feedback information collecting portion 132 collects interaction information fed back from the user who received information (Step S1518) to input it to the information notifying state history accumulating portion 116 as feedback information (Step S1520). Such an arrangement can proactively improve accuracy of expression capability of the user's state model.

Subsequently, the sense portion 150 and the environment user state managing portion 140 will be described.

At first, the sense portion 150 will be described.

The sense portion 150 refers to all devices having function of acquiring/outputting information indicating the states of users and environments, such as respective kinds of sensors such as acceleration sensor, vibration sensor, microphone and camera etc. and terminals such as a computers and cellular phones. Of course, there is a case where a user interface portion 130 as well as the sense portion 150 is disposed on the same information display terminal. The information acquired by the sense portion 150 is notified to the sensor information receiving portion 144.

On the other hand, the sensor information receiving portion 144 inputs the information received from the sense portion 150 to the environment user's state generating portion 142.

The environment user's state generating portion 142 implements preprocessing and normalization processing corresponding with the types of information and thereby removes variations and noises to a certain extent. And feature extraction from the information is implemented to make feature vectors and identification processing such as clustering etc. is implemented to generate meaningful information. These types of processing are different in the subject data and the subject that is desired to undergo intended identification. For example, on the user motion state of configuring information network, information of a wearable acceleration sensor mounted onto a user, for example, undergoes feature extraction in sections divided into a certain fixed time window. Such an arrangement can make state information such as "staying still", "walking" and "running" etc. on a time unit basis.

These pieces of environment user's state information are inputted to the environment user's state accumulating portion 146 and accumulated/managed together with the time information.

According to embodiments of the present invention, understanding circumstances of users who live in the real world, information notification that can restrain users' task discontinuancy lowly and retain users' information recognition highly is realizable. The two elements of task discontinuancy and information recognition are human internal states that cannot be observed directly, and therefore observable elements that influence the both elements are introduced so as to retain/manage these plurality of inter-element relationship structures dynamically, and thereby adaptive state management corresponding with circumstances will become feasible, and based on that state, suitable information notification will become feasible.

In addition, while "information recognition state" and "task interruption level" with notification are being assumed dynamically as human internal state elements, the notification method can be controlled. In addition, those states of inter-element relationships can be learnt/updated dynamically while notification is being repeated.

(Configuration for information renotification)

In the present invention, on execution of information renotification, whether or not renotification is implemented is determined in consideration of users' state called as information recongnizability by users and renotification is controlled. Specifically, to users who live in the real world where a variety of information display terminals straggle and to users who own information display terminals, without requiring distinct user reaction, a state of user's receiving information is assumed and it is determined whether or not reception has taken place, and in the case where it has been determined that no reception has taken place, notification is implemented again. Here, "Information recognizability" refers to a level of a user's perceiving and recognizing contents of information. This element is a comparatively low element in information processing process of human beings and its dependency onto information contents is small. This will make it possible to detect information receipt of which was not successful due to a state of some kind in proactive push type information notification that never used to occur in information notification at a type of conventional initiative (request) of users, to renotify it to the users and thereby to avoid any loss in receipt of information.

Specifically, information receiving states by users are assumed in consideration of users' states at the time when information has been notified, for example, a user gazing state onto an information display terminal, tasks on the information terminal, user's task proficiency, user motion state, information contents (information urgency, information amount), information recognition speed, changes in state after notification and changes in applications etc. In addition, the user terminal being the terminal apparatus related to the present invention includes any information notification apparatus capable of presenting information, for example, a display type apparatus. For example, desk top type personal computers, television sets, electronic billboards, information windows, notebook type personal computers, PDAs, hand-held terminals, cellular phones, wrist watches, future notebook type displays etc. are included as information notification apparatus.

(Configuration of information renotification system)

FIG. 16 is a block diagram showing a configuration example of an information renotification system according to the present embodiment. In the present drawing, an information renotification system 10 according to the present embodiment is configured by including a notification controlling server 1000 of controlling renotification, a user terminal 200 for users to receive/make reference to notification information and an information provider 300 of transmitting the notification information to users.

(Configuration of notification controlling server)

A notification controlling server 1000 is configured by including a renotification controlling portion 1200 that assumes user's states related to the information notification, determines whether or not to implement renotification and makes an request of renotification according to the determination result, a server side notification controlling portion 1400 that is connected to the renotification controlling portion 1200 and implements notification control and environment user's state managing portion 160 that is connected to the renotification controlling portion 1200 and obtains/manages users' states.

The renotification controlling portion 1200 inside the notification controlling server 1000 is configured by including a renotification determining portion 1220 of assuming user's states and determining whether or not renotificaiton should be implemented, a renotification requesting portion 1300 of transmitting a notification information reaccumulation request S102 of renotifying already notified information based on the renotification determination result information S101 of the renotification determining portion 1220 and an already notified information accumulating portion 1320 of accumulating an information notification request S103.

(Renotification determining portion 1220)

A renotification determining portion 1220 is configured by including a renotification determining portion 1240 of determining whether or not renotification should be implemented, an information recognizability assuming portion 1260 of assuming users' states and an expected information recognition amount accumulating portion 128 of accumulating expected information recognition amounts.

(Renotification determining portion 1240)

The renotification determining portion 1240 inside the renotification determining portion 1220 outputs an information recognizability assumption request S105 to the information recognizability assuming portion 1260 corresponding with presentation controlling information S104 inputted from the user terminal 200. Here, the presentation controlling information S104 is configured by an identifier of notification information presented to a user subject to transmission from the notification controlling server 1000 (that is, already notified information) and time information indicating time when the already notified information was notified to the user and the like. In addition, the information recognizability assumption request S105 is configured by the identifier of the already notified information and the information on time when the already notified information was notified to the user (that is, presenting time) and the like. And the renotification determining portion 1240 calculates expected information recognition amount based on information recognizability information S106 returned from the information recognizability assuming portion 1260. The expected information recognition amount is an information amount of the already notified information assumed to have been recognized by a user. That expected information recognition amount will be described later.

Moreover, the renotification determining portion 1240 outputs already notified information length obtaining request S107 to the already notified information accumulating portion 1320 so as to obtain a response S108 consisting of information length of information corresponding to the identifier of the already notified information and the related meta-information. In addition, the renotification determining portion 1240 outputs, to the expected information recognition amount accumulating portion 128, a previous expected information recognition amount obtaining request S109 for obtaining expected information recognition amount (hereinafter to be referred to as previous expected information recognition amount) at the time of having notified in the past and obtains the previous expected information recognition amount of the information corresponding to the identifier of the already notified information included in a previous expected information recognition amount requested respond S110 for it.

And, the renotification determining portion 1240 compares the previously calculated expected information recognition amount, the expected information recognition amount in consideration of the previous expected information recognition amount in the past and the information length of the already notified information and the meta-information (importance level information etc.) of the already notified information. Comparing them, the renotification determining portion 1240 determines whether or not renotification should be implemented, and outputs the renotification determination result information S101 to the renotification requesting portion 1300. The renotification determination result information S101 is configured by a determination information of determining renotification by presenting "1" in case of implementing renotification and "0" in case of implementing no renotification and an identifier of the already notified information. Details will be described later.

Moreover, the renotification determining portion 1240 outputs an expected information recognition amount accumulation deletion request S111 to the expected information recognition amount accumulating portion 128 after the above described determination. In case of implementing renotification, that the expected information recognition amount accumulation deletion request S111 includes newly calculated expected information recognition amount and the identifier of the already notified information. On the other hand, in case of implementing no renotification, the expected information recognition amount accumulation deletion request S111 includes the identifier of the already notified information and the expected information recognition amount having the value "0".

(Information recognizability assuming portion)

The information recognizability assuming portion 1260 inside the renotification determining portion 1220 is managed with the Bayesian network configured by information recognizability information S106 and a plurality of pieces of observable element information related to this information recognizability information S106. The Bayesian network is a model that expresses qualitative dependency relationship among a plurality of random variables with a graph structure and expresses quantitative relationship between respective variables with the conditioned probability. The Bayesian network and the observable element information configuring it will be described later.

The information recognizability assuming portion 1260 assumes information recognizability information corresponding with the information recognizability assuming request inputted from the renotification determining portion 1240 and returns the information recognizability to the renotification determining portion 1240. In assuming information recognizability, the information recognizability assuming portion 1260 outputs the environment user's state information obtaining request S119 to the environment user's state managing portion 160. The environment user's state information obtaining request S119 includes an identifier of the observable element information to be obtained and information of the presenting time when the already notified information was presented. On the other hand, as a return value of the environment user's state information obtaining request S119, the environment user's state information S120 is inputted from the environment user's state managing portion 160 to the information recognizability assuming portion 1260, and the information recognizability information is assumed with assumption method of the above described Bayesian network.

(Expected information recognition amount accumulating portion)

The expected information recognition amount accumulating portion 128 inside the renotification determining portion 1220 inputs a previous expected information recognition amount obtaining request from the renotification determining portion 1240 and searches whether or not the expected information recognition amount corresponding to the identifier of the already notified information included in the present request is accumulated inside. In case of accumulation, the expected information recognition amount information is returned to the renotification determining portion 1240 of the previous expected information recognition amount information while, in case of no accumulation, "0" is returned.

On the other hand, the expected information recognition amount accumulation deletion request S111 is inputted to the expected information recognition amount accumulating portion 128 after renotification determination in the renotification determining portion 1240. As described above, in case of renotification, the expected information recognition amount accumulation deletion request S111 includes the expected information recognition amount calculated for determination together with the identifier of the already notified information, all of which are accumulated in the expected information recognition amount accumulating portion 128. In addition, in the case where renotification is not implemented, the expected information recognition amount accumulation deletion request S111 includes the identifier of the already notified information and the expected information recognition amount of "0", and based on the identifier of the already notified information, it is searched whether or not the expected information recognition amount information is accumulated in the expected information recognition amount accumulating portion 128. And, in the case where the information is accumulated in the expected information recognition amount accumulating portion 128, that expected information recognition amount is deleted.

The renotification requesting portion 1300 outputs the already notified information obtaining deletion request S112 to the already notified information accumulating portion 1320 in the case where the renotification determination result information inputted from the renotification determining portion 1240 is "1". The already notified information obtaining deletion request S112 includes the flag information indicating obtaining or deleting ("1" in this case) and the identifier of the already notified information. And when the already notified information S113 corresponding to the identifier of the already notified information is inputted to the renotification requesting portion 1300 from the already notified information accumulating portion 1320, the renotification requesting portion 1300 outputs the notification information reaccumulation request S102 to the server side notification controlling portion 1400. That notification information reaccumulation request S102 includes the already notified information. On the other hand, in the case where the renotification determination result information inputted from the renotification determining portion 1240 is "0", the already notified information obtaining deletion request is likewise outputted to the already notified information accumulating portion 1320. The already notified information deletion request information includes the flag information indicating obtaining or deleting ("0" in this case) and the identifier of the already notified information that is not renotified.

When the server side notification executing portion 1440 inside the server side notification controlling portion 1400 outputs information notification request S103 to the user terminal 200, the already notified information accumulation request S114 is inputted from the server side notification executing portion 1440 to the already notified information accumulating portion 1320. The already notified information accumulation request S114 inputted to the already notified information accumulating portion 1320 includes the already notified information as well as its identifier and information length of the already notified information. The already notified information accumulating portion 1320 accumulates/ manages the already notified information, the identifier of the already notified information, information length of the already notified information and its meta-information when the already notified information accumulation request S114 is inputted. On the other hand, the already notified information accumulating portion 1320, to which the already notified information length obtaining request S107 is inputted from the renotification determining portion 1240, returns information length of the already notified information and its meta-information as the response S108.

In addition, to the already notified information accumulating portion 1320, the already notified information obtaining deletion request S112 from the renotification requesting portion 1300 is inputted. In case of the flag information indicating obtaining or deleting, that is included in the already notified information obtaining deletion request S112, being "1 ", the already notified information accumulating portion 1320 returns the already notified information S113 corresponding with the identifier of the already notified information included in that request S112. On the other hand, in case of the flag information indicating obtaining or deleting being "0", it deletes from inside the already notified information included in that request S112 corresponding with the identifier of the already notified information.

(Environment user's state managing portion)

The environment user's state managing portion 160 obtains collection information S115a and S115b from the state information data collecting portion 206a provided in the user terminal 200 and the state information data collecting portion 206b provided in the place other than the user terminal 200. That collection information S115a and S115b includes sense information, for example, sensor information being an output of a sensor and interaction information. The environment user's state managing portion 160 in receipt of the collection information S115a and S115b converts and interprets those pieces of information and thereby produces element information used in the information recognizability assuming portion 1260. For example, the environment user's state managing portion 160 implements identification processing such as preprocessing, normalization processing, feature extraction processing and clustering etc. onto the sense information in receipt. In addition, the environment user's state managing portion 160 makes the environment state information by causing the sensor information to undergo processing and, makes user information by causing the interaction information to undergo processing and, thereby, makes the environment user's state information.

(Server side notification controlling portion)

A server side notification controlling portion 1400 is configured by including the notification candidate information accumulating portion 1420 of receiving and accumulating notification information requesting information from an information provider 300 and a server side notification executing portion 1440 of outputting notification candidate information present in the notification candidate information accumulating portion 1420 to a user side notification executing portion 202 inside the user terminal 200.

(Notification candidate information accumulating portion)

The notification candidate information accumulating portion 1420 receives a notification request S116 from an information provider 300. To that notification request S116 the notification information to be notified to the user terminal 200 as well as meta-information such as the information amount, the remaining time to the end of the valid time and information weighted by the transmitting party's information is provided. The notification candidate information accumulating portion 1420 provides notification information with identifiers respectively and accumulates them. As an accumulation order of the received notification information, order of receipt, the remaining time to the end of the valid time, weighting with user preference, weighting with transmitting party's information and the like can be utilized.

As a method of receiving the notification request S116, receipt with electronic mails, electronic news, E-mail newsletters and the like, and receipt with distribution with pager services, text broadcasting on the radio, WWW contents and instant massages (IM) are included. In addition, schedulers that the user himself has registered and to-do lists etc. are included in the notification information. In addition, as types of information, news (for example, politics, economy, society, culture, sports and weather), film information, gourmet information, traffic information, television programs, stock information, weather, fortune telling, event information, learning information (English word memorizing service), electronic mails from acquaintances, contacts from companies, urgency contacts on such as a disaster etc., advertisements, menu services, Forgot and Found service, Lost and Found service, health promotion information and last train information etc. are nominated.

The notification candidate information accumulating portion 1420 receives the notification information reaccumulation request S102 from the renotification requesting portion 1300, and then accumulates that requested information. Moreover, the notification candidate information accumulating portion 1420 inputs an accumulation notification candidate information obtaining request S 117 from the server side notification executing portion 1440, and then outputs notification candidate information etc. as its response S118.

The notification candidate information accumulating portion 1420 configured like this accumulates and manages contents of the notification request S116 received from the information provider 300. At the time of that accumulation, notification information included in the notification request is provided with respectively unique identifiers, and the notification candidate information is accumulated in a waiting notification information buffer based on the order of receiving respective information. In addition, it is also possible to determine the order based on contents of the notification candidate information, for example, importance, urgency and transmitting parties to implement accumulation. In addition, corresponding with the accumulation notification candidate information obtaining request S117 being an inquiry from the server side notification executing portion 1440, the notification candidate information accumulating portion 1420 responds with notification candidate information and a number of information in accumulation.

(Server side notification executing portion)

The server side notification executing portion 1440 outputs the accumulation notification candidate information obtaining request S117 to the notification candidate information accumulating portion 1420 and obtains notification candidate information as the response S118. And, the server side notification executing portion 1440 transmits the notification candidate information to the user side notification executing portion 202 inside the user terminal 200 as information notification request S103. In addition, the server side notification executing portion 1440 transmits the already notified information accumulation request S114 to the already notified information accumulating portion 1320. The already notified information accumulation request S114 includes already notified information together with its identifier and, besides them, meta-information such as the information length received from the information provider 300, the remaining time to the end of the valid time and information weighted by the transmitting party's information.

The server side notification executing portion 1440 configured like this determines whether or not candidate information to be notified is present (accumulated) in the notification candidate information accumulating portion 1420, and notifies it to the user terminal 200 in case of the notification candidate information being present. There, the server side notification executing portion 1440 includes the notification candidate information into the information notification request S103 based on the order registered in the waiting notification information buffer of the notification candidate information accumulating portion 1420, and transmits it to the user side notification executing portion 202 inside the user terminal 200.

Moreover, the server side notification executing portion 1440 includes the notification candidate information included in the information notification request S103 into the already notified information accumulation request S114 as already notified information and transmits it to the already notified information accumulating portion 1320. The already notified information accumulating portion 1320 accumulates the already notified information obtained from the server side notification executing portion 1440 inside.

(User terminal)

The user terminal 200 is configured by including the user side notification executing portion 202 of receiving the information notification request S103 from the server side notification executing portion 1440 and presenting the notification candidate information to a user, the information presentation managing portion 204 of transmitting the presentation controlling information S104 to the renotification determining portion 1240 and the state information data collecting portion 206a of collecting and transmitting information for use in order to make environment user's state information in the environment user's state managing portion 160.

The user side notification executing portion 202 receives the information notification request S103 from the server side notification executing portion 1440 and then outputs the notification candidate information included in the information notification request S103 to the user terminal 200 in order to present it to the information receiving party 400 being the user of his own terminal. In that case, for example, visual information such as texts and image information etc. is presented with a display on the user terminal, audio information such as sound information etc. is presented with speakers and perceptional information is presented with devices having perceptional interface (for example, vibrators etc.).

And the user side notification executing portion 202 presents the notification candidate information to the information receiving party 400 and at the same time outputs the presentation event information S121 to the information presentation managing portion 204. The presentation event information S121 includes identifier as well as presented time information of the notification information.

The information presentation managing portion 204 outputs the presentation control information to the renotification determining portion 1240 after presenting the notification information or after presentation has been over, based on the notification event information from the user side notification executing portion 202. There, the presentation controlling information S104 includes flag information of indicating presentation starting ("1") or presentation finalization ("0"), identifier of the already notified information and time information of indicating presentation stating or presentation finalization time of the already notified information. Here, the time information is obtained from the OS (Operating System) used in the user terminal 200 and thereby is acquired.

Operations of the user terminal 200 configured as described above will be described.

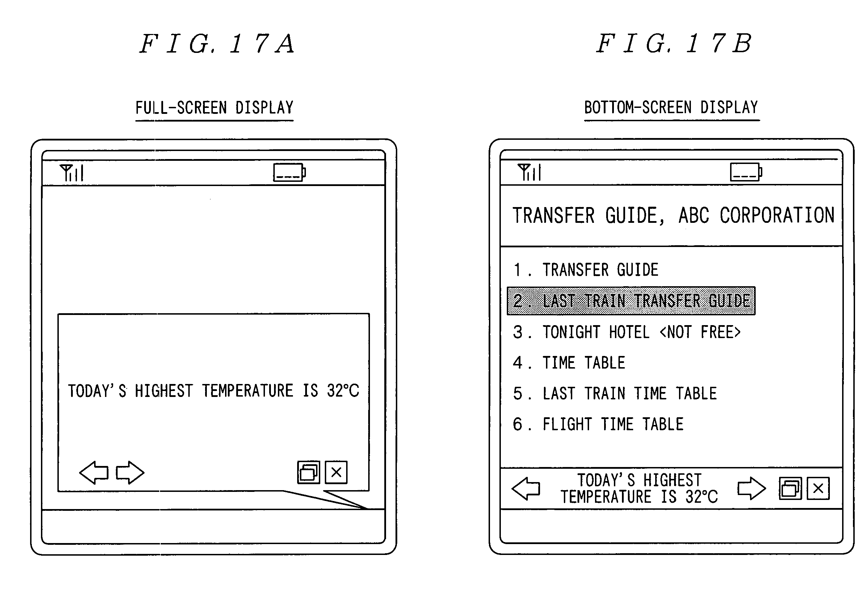

The user side notification executing portion 202 inside the user terminal 200 actually presents information onto information terminal external output apparatus with an information notification request received from the server side notification executing portion 1440. The user terminal has a user interface capability being capable of displaying the notification information, and controls display locations/sizes, methods of presenting texts and information updating frequency (speed). The user interface can undergo user's adjustment on timing in information notification and expression methods. Moreover, the user interface can accept interaction from the information receiving party, that is, the user. For example, the user terminal 200 can display information onto the whole screen as shown in FIG. 17A and onto the bottom of the screen as shown in FIG 17B.

The user terminal 200 is provided with has a display position/size changeable button for implementing such as vertical and horizontal scroll, a display update frequency (speed) changeable button and a button of halting display itself etc. so as to enable display corresponding with user's preference. In addition, clicking and designating the information itself, an access to link information is feasible as well.

The state information data collecting portions 206a and 206b refer to all devices having function of acquiring/outputting information indicating the states of users and environments, such as respective kinds of sensors such as acceleration sensor, vibration sensor, microphone and camera etc. and terminals such as a computers and cellular phones. Moreover, it includes the primary task execution speed in addition to the display speed adjusting operation and the display size adjusting operation on the information presentation managing portion 204 and measures this task execution speed. And at the same time, it measures the button operation speed up to the commencement of respective kinds of applications, letter input speed at the time of mail editing and browsing speed at the time of Web reference and obtains unspecified feedback information, for example changes in task speed on an information display terminal that a user has already been implementing at the time of information notification.

(State information data collecting portion)

The state information data collecting portion 206a provided in the user terminal 200 collects information for use in the environment user's state managing portion 160 in order to make environment user's state information periodically or corresponding with events and outputs it to the environment user's state managing portion 160 as collection information S115a. That collection information S115a is provided with time information respectively.

In addition, the state information data collecting portion 206b is provided besides the user terminal 200. For example, a sensor mounted onto the information receiving party 400 being the user besides the user terminal 200 and a sensor provided on the wall etc. in the periphery of the place where the use is present are adapted to the state information data collecting portion 206b.

That is, the collection information S115a by the state information data collecting portion 206a and the collection information S115b by the state information data collecting portion 206b include information outputted from all devices such as information display terminal that the user uses and devices embedded into the environment. For example, interaction information on the user's information display terminal, sense information of an acceleration sensor mounted onto the user terminal 200 and the like are included in the collection information S115a and S115b.

(Operations of renotification controlling system)

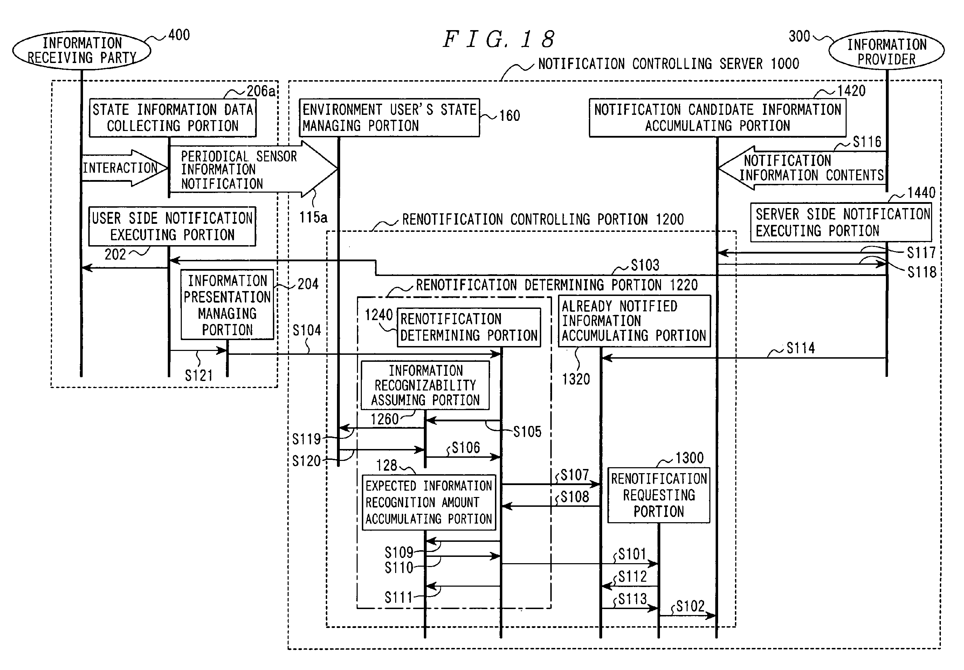

Subsequently, operations of renotification controlling system related to the present embodiment will be described with reference to FIG. 18. The drawing is a sequence diagram depicting procedures of implementing renotification in the information renotification system 10 in FIG. 16.

In the drawing, the interaction information by the information receiving party 400, the application state information and the OS information that can be collected with the user terminal 200 is periodically collected with state information data collecting portion 206a all the time. That periodically collected information is notified to the environment user's state managing portion 160 together with the time information as the collection information S115a. Likewise, information from the sensor mounted onto the user terminal is collected with a state information data collecting portion 206b not shown in the drawing and is notified to the environment user's state managing portion 160 together with the time information as the collection information S115b.

At first, the information provider 300 transmits the notification request S116 to the notification candidate information accumulating portion 1420 inside the server side notification controlling portion 1400. There, the notification request S116 includes contents of the notification information (that is, notification information contents). Moreover, the notification request S116 may include meta-information related to the notification information, such as the information length, importance and valid time.

The notification candidate information accumulating portion 1420 receives this notification request S116, and then provides the notification information included in the notification request S116 with respectively unique identifiers, and accumulates it as the notification candidate information. Thereafter, when the accumulation notification candidate information obtaining request S117 is inputted from the server side notification executing portion 1440 to the notification candidate information accumulating portion 1420, the notification candidate information is inputted to the server side notification executing portion 1440 as the response S118 thereof.

The server side notification executing portion 1440 inside the server side notification controlling portion 1400 notifies the notification candidate information inside the notification candidate information accumulating portion 1420 inside the server side notification controlling portion 1400 to the user side notification executing portion 202 inside the user terminal 200 as the information notification request S103.

Moreover, the server side notification executing portion 1440 transmits the already notified information accumulation request S114 to the already notified information accumulating portion 1320 inside the renotification controlling portion 1200. There, the already notified information accumulation request S114 includes the notification candidate information and the identifiers thereof.

The user side notification executing portion 202 receives the information notification request S103, and then outputs the notification candidate information included therein to outside and presents it to the information receiving party 400. In addition, the user side notification executing portion 202 transmits the presentation event information S121 to the information presentation managing portion 204.

The above is operations of the notification control.

Subsequently, operations on the renotification control will be described.

The information presentation managing portion 204 notifies the renotification determining portion 1240 inside the renotification controlling portion 1200 of the flag information (=1) indicating commencement of presentation as well as identifiers of the already notified information and presenting time information on the presented time as the presentation controlling information S104 after presenting the information.

The renotification determining portion 1240 receives the presentation controlling information S104, and, among presenting control information, in the case where the flag information indicating the commencement or finalization of presentation is "1", transmits the information recognizability assumption request S 105 to the information recognizability assuming portion 1260 based on that information. There, the information recognizability assumption request S105 includes presenting time information indicating the time when the already notified information was presented on the user terminal 200.

The information recognizability assuming portion 1260 receives information recognizability assumption request, and then transmits the environment user's state information obtaining request S119 to the environment user's state managing portion 160. There, the environment user's state information obtaining request S119 includes the presenting time information received from the renotification determining portion 1240 and a plurality of identifiers of the observable element information of the internally managed Bayesian network.

The information recognizability assuming portion 1260 receives the environment user's state information S120 from the environment user's state managing portion 160, then calculates the information recognizability with probability inferring calculation based on those pieces of information and returns the calculation result thereof to the renotification determining portion 1240 as the information recognizability information S106.

On the other hand, the renotification determining portion 1240 transmits the already notified information length obtaining request S107 to the already notified information accumulating portion 1320. There, the already notified information length obtaining request S107 includes the identifiers of the already notified information included in the presenting event information.

The already notified information accumulating portion 1320 receives the already notified information length obtaining request S107 and then responds to the renotification determining portion 1240 with the response S108 consisting of the already notified information, the information length thereof and the related meta-information based on the identifiers of the already notified information.

Moreover, the renotification determining portion 1240 transmits the previous expected information recognition amount obtaining request S109 to the expected information recognition amount accumulating portion 128. There, the previous expected information recognition amount obtaining request S109 includes the identifiers of the already notified information. The expected information recognition amount accumulating portion 128 receives the previous expected information recognition amount obtaining request S109, and then searches, based on the identifiers of the already notified information, whether or not the expected information recognition amount has already been accumulated and, in the case where it is accumulated, responds to the renotification determining portion 1240 with previous expected information recognition amount as the previous expected information recognition amount requested respond S110. On the other hand, as a result of searching, in the case where nothing is accumulated, it responds with the previous expected information recognition amount being "0" as the previous expected information recognition amount requested respond S110.

The renotification determining portion 1240 respectively receives the information recognizability information S106 from the information recognizability assuming portion 1260, the response S108 including information length of the already notified information and the meta-information thereof from the already notified information accumulating portion 1320 and the previous expected information recognition amount from the expected information recognition amount accumulating portion 128 as the previous expected information recognition amount requested respond S110 including the previous expected information recognition amount, and then compares the information recognition amount calculated from the information recognizability and the information length of the already notified information and the meta-information thereof into comparison, and thereby determines whether or not renotification should be implemented and makes renotification determination result. The made renotification determination result is transmitted to the renotification requesting portion 1300 as the renotification determination result information S101. There, the renotification determination result information S101 includes the identifiers of the already notified information and the flag whether or not renotification should be implemented. For that flag, "1" is described in case of implementing renotification while "0" is described in case of implementing no renotification.

In addition, the renotification determining portion 1240 transmits the expected information recognition amount accumulation deletion request S111 to the expected information recognition amount accumulating portion 128 after the above described processing. There, the expected information recognition amount accumulation deletion request S111 will include expected information recognition amounts having positive values in the case where renotification is implemented, and include expected information recognition amounts having the value of "0" in the case where no renotification is implemented.

The expected information recognition amount accumulating portion 128 receives the expected information recognition amount accumulation deletion request S111, and then accumulates the expected information recognition amounts together with the identifiers of the already notified information in the case where the expected information recognition amounts are positive values, and otherwise deletes the information corresponding to the identifiers of the already notified information.

Subsequently, the renotification requesting portion 1300 receives the renotification determination result information S101, and then transmits the already notified information obtaining deletion request S112 to the already notified information accumulating portion 1320. There, the already notified information obtaining deletion request S112 includes the identifier of the already notified information and the flag whether or not the preceding renotification is implemented.

The already notified information accumulating portion 1320 receives the already notified information obtaining deletion request S112, then responds to the renotification requesting portion 1300 with the already notified information corresponding to the identifier of the already notified information included in the S112 in case of the flag whether or not the renotification is implemented being "1 ", and otherwise deletes the accumulation information corresponding to the identifier of the already notified information.

In case of implementing renotification, the renotification requesting portion 1300 receives the already notified information S113 as the response to the already notified information obtaining deletion request S112, and then notifies the notification candidate information accumulating portion 1420 of the notification information reaccumulation request S102. There, the notification information reaccumulation request S102 includes the already notified information as well as the identifier thereof.

Afterwards, the above described processing is repeated.

(Bayesian network)

Subsequently, Bayesian network in the prior described information recognizability assuming portion 1260 and the observable element information configuring it will be described.

The Bayesian network not only has visualizability with model expression but also can be reflected onto the model structure with prior knowledge on respective issue area as relationship of order among random variables. Like that, a big difference from a conventional graphical modeling can be said to be the point that use of Bayesian network adapted to respected issue area enables prediction of probability of the other variables at the time when a part of variables are observed and of the state where the subject probability variables will become maximum. Here, the Bayesian network is described in a document "A tutorial on learning with Bayesian networks",[1995],Microsoft Research MSR-TR-95-06, Revised June 1996. by Heckerman, D.

The Bayesian network configured by a plurality of pieces of observable element information related to the information recognizability in the information recognizability assuming portion 1260 can be obtained with "information recognizability" element being internal state element of a human being at the time of notification and the state information data collecting portion 206a and 206b, and can be made (interpreted) with the environment user's state managing portion 160, and manages in conditioned probability expression the relationships among observable state element information such as "user feature", "user state" and "task state" having causal relationship with the prior information recongnizability element, "information expression" element information of determining the method of displaying information at the time of notification and "reaction state" element information being an observable element after notification. Specifically, it is configured by the non-observing user state element, that is, at least one of "user characteristic" element information, "user state" element information and "task state" element information as the cause element of "information recognizability" information, and the "information expression" element information. Moreover, it will become a causal network that will be derived when the "reaction state" element information will become the result element of "information recognizability".

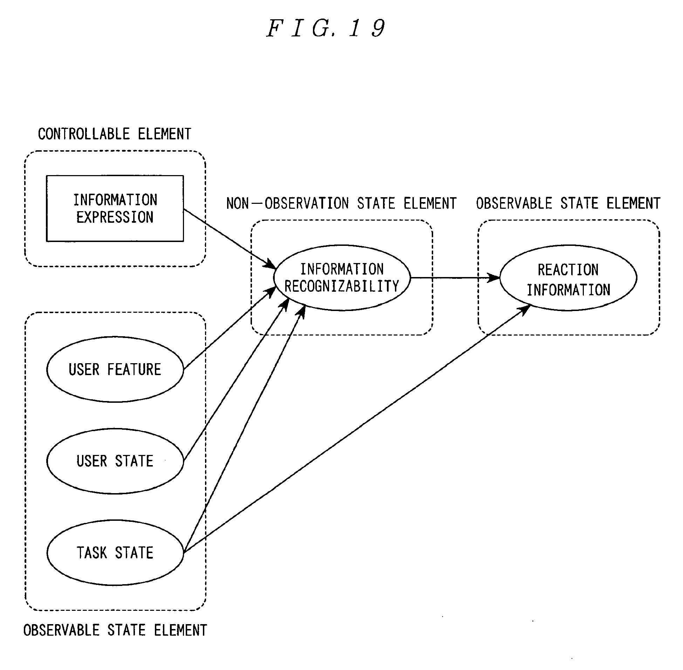

An example of the Bayesian network is shown in FIG. 19. The linking shown by arrows between respective elements in the drawing indicates probability of element-to-element shifting. There, the linking between respective elements in the drawing is only an example and is changed dynamically corresponding with intensity of the causal relationships.

Subsequently, elements of configuring the Bayesian network will be described. The "user characteristic" element information is different from the "user state" that changes from time to time but is element information that is static to a certain extent. For example, it has values of discrete variables such as "high proficiency", "intermediate proficiency" and "low proficiency" etc. on "proficiency in use of utilization terminal or application". Those pieces of information are obtainable from average task processing, for example, the proportion of the subject user's letter inputting speed to the average letter inputting speed of a plurality of users.

The "user state" element information is the element information indicating user's states, for example, motion information and gazing state onto the screen etc. The former has values of discrete variables such as, for example, "staying still", "walking", "running", "ascending the steps" and "descending the steps" etc. As a method of obtaining those states, a method by way of image recognition with an external camera and a method of analyzing information from a wearable sensor etc. are applicable. On the other hand, the latter has values of discrete variables such as "gazing on the screen" and "not gazing on the screen" etc. Therein, the state of "watching the information display terminal but doing noting" is not obtainable from the OS (Operating System) or application state information on the information display terminal. Therefore, a method by way of image recognition with an external camera, a method of user's wearing a head mount display (HMD) etc. and a method of analyzing information from a sensor mounted onto the terminal etc. are applicable to a state on whether or not the user's gaze is directed onto the information display terminal, that is, the gazing state.

The "task state" element information is an element information of showing user's working states on an information display terminal. For example, it has values of discrete variables such as the states of "doing nothing", "watching the information display terminal but doing noting", "web browsing", "editing an E-mail", "dictionary search", "making reference to images", "setting a terminal", "appreciating streaming audio and video" and "making reference to a document" etc. They are obtainable from the OS or application state information on the information display terminal.

An "information expression" element information is element information of showing a method of information expression/display on the information display terminal. It represents, for example, media types such as visual media such as texts, animation and moving pictures etc., audio media and vibration media etc. In addition, the text media are classified by display position/size, a method of presenting texts and update frequency (speed) of information.

As shown in the above described FIG. 17, the display position/size include, for example, display onto the whole screen, the bottom of the screen and the side of the screen while the presenting method includes scroll display in the horizontal direction or vertical direction and a switching type. In addition, also for scrolling and switching, rapid display and slow display are present as frequency (speed) thereof. They are controlled in a user side notification executing portion 202 to be described later.

On the other hand, "reaction information" element information is element information indicating information derived after notification. Not only specified interaction by a user (button pushing for making reference to notification information and reference history of a mailer etc.) but also the main task processing speed proportion in case of comparing with the case when no notification is implemented and faulty operations in the main task etc. are nominated.

In the case where "user characteristic", "user state" "task state" and "reaction information" elements as observable state element as described above are derived, the information recognizability assuming portion 1260 implements probability calculation based on the Bayesian network configured by those observable state elements and "information recognizability" element information.

There, as for learning with model parameter assumption for making those structure models, it is necessary to learn off-line in advance. In addition, it is possible to learn on-line. Off-line learning is realized by observing such a circumstance out that will give rise to the whole combinations of discrete variables and observing objective information. The model structures are determined with, for example, AIC (Akaike's information criterion), MDL(Minimum description length) and BIC (Bayesian information criterion).

On the other hand, attainment of "information recognizability" is realized by implementing probability inferring based on the observable state element. As algorism, inferring algorisms can be used such as Polytree algorism for a network lacking a loop and Junction Tree algorism for a network having a loop etc., and as approximate calculation, Loopy Belief Propagation algorism etc. can be utilized.

As described above, managing the information recognizability with a Bayesian network model and assuming probability of the information recognizability, the information recognizability of a human being that cannot be observed directly can be assumed. Based on that assumption result, whether or not renotification is implemented is determined, and therefore renotification of information can be implemented appropriately.

(Calculation of expected information recognition amount)

Subsequently, a method of calculating and a method of determining expected information recognition amounts that are calculated in the above described renotification determining portion 1240 will be described.

The renotification determining portion 1240 determines whether or not renotification is implemented based on the posterior probability $P(IA(m, k))$ of information recognizability included in information recognizability assumption request response. In determination, in the case where the equation of determining the information recognition amounts corresponding with discrete state value $IA(m, k)$ of the information recognizability is given as $((IA(m, k))$ and presenting time of the already notified information m being a determination subject in the present time is calculated as $T(m)$, the expected information recognition amount EAI (Expected Awareness Information) is derived. There, $((IA(m, k))$ is taken as recognition information processing speed per unit time, where, the unit will become [bytes/sec] for example, and the unit of EAI(m) will become [bytes]. Specifically, the information recognition amount in each discrete state k is derived by multiplying the probability to become the state k and taking the total sum on all k (k pieces). The following Equation (17) expresses the above description.

$$EAI(m)=(p(IA(m,k))(((IA(m,k))(T(m) \ldots (17)$$

where, "(" in the Equation (17) denotes the total sum for k=1 to k=K.

The renotification determining portion 1240 compares the EAI value derived with the above described equation, with the information length L(m) of the already notified information m included in the already notified information length obtaining request response. And, a case of EAI<((L(m) is determined to be the one for renotification and the otherwise case is determined to be the one for no renotification. There, ( is a parameter of controlling threshold values.

Specifically, the following will become applicable. The discrete state K is "3", that defines three types of high probability (hereinafter to be referred to as high probability), low probability (hereinafter to be referred to as low probability) and intermediate probability between them (hereinafter to be referred to as intermediate probability). For example, the high probability is 0.8, the intermediate probability is 0.15 and the low probability is 0.05. In addition, for the recognition information processing speed ((IA(m, k)) per unit time, the high probability is set as 20 letters/second, the intermediate probability as 10 letters/second and the low probability as 5 letters/second. In such a case, al the time the already notified information m is presented for a second (T(m)=1), multiplication thereof in accordance with the equation (17) will derive 0.8(20+0.15(10+0.05(5=17.75 letters being the expected information recognition amount.

There, corresponding with importance level information included in meta-information of the already notified information included in the already notified information length obtaining request response, the value of ( is made large in case of high importance level and otherwise made low so as to make important information apt to undergo renotification. In addition, inputting setting policy at the user side in advance, optimum control will become feasible.

Moreover, the EAI can be calculated in consideration of the expected information recognition amount at the time of notification in the past time. Specifically, the expected information recognition amount at the time o1 notification in the past time (that is, previous expected information recognition amount) is obtained from the previous expected information recognition amount included in the previous expected information recognition amount requested respond S110, and that is calculated as EAIprev as follows.

$$EAI(m)=(p(IA(m,k))$$

$$(((IA(m,k))(T(m)+EAIprev(m) \ldots (18)$$

where, "(" in Equation (18) denotes the total sum for k=1 to k=K.

Adopting the above described Equation (17) to determine renotification of the already notified information corresponding with the newly calculated expected recognition information amount, possibility of the notified information being recognized by a user can be increased. However, on the contrary, the possibility of renotification on the information that a user has already recognized will be increased, occasionally making the user feel intrusive.

On the other hand, adopting Equation (18) to determine renotification of the already notification information corresponding with the previous expected information recognition amount being the expected information recognition amount in the past besides the newly calculated expected recognition information amount, the whole processing of renotify information can be completed early so that a user feels little intrusive. However, on the contrary, possibility of being recognized by a user occasionally gets low.

(Summary)

Subsequently, operations and advantages of the renotification controlling system related to the present embodiment will be described. The information notification system 10 related to the present embodiment requests calculation of information recognizability from the renotification determining portion 1240 to the information recognizability assuming portion 1260 with the presented event presented in a user terminal as a trigger, compares the expected information recognition amount calculated from that result with information length of the adapted already notified information in utilization of the previous expected information recognition amount at the time of having notified in the past, and thereby assumes whether the present information has been recognized by the user, and realizes implementation of renotification in case of determination that it has not been completely recognized yet. Especially, according to the present example, after information has been notified, the circumstances at the time of notification are understood, it is assumed/determined whether or not a user has recognized the notification information in consideration of reaction due to notification and renotification is implemented in the case where the information has not been recognized, and thereby disadvantages to the user due to information loss can be avoided. This realizes effective notification control not for only general users being information receiving parties, but also for information providers who desires to notify information without fail and efficiently. For realization, observable elements called information recognition that influences human internal state elements that cannot be observed directly are introduced and the relationship structure among a plurality of those elements is retained/managed dynamically, and thereby state management at the time of information notification as well as after notification will become feasible and appropriate information renotification determination will become feasible based on that state.

(Variation)

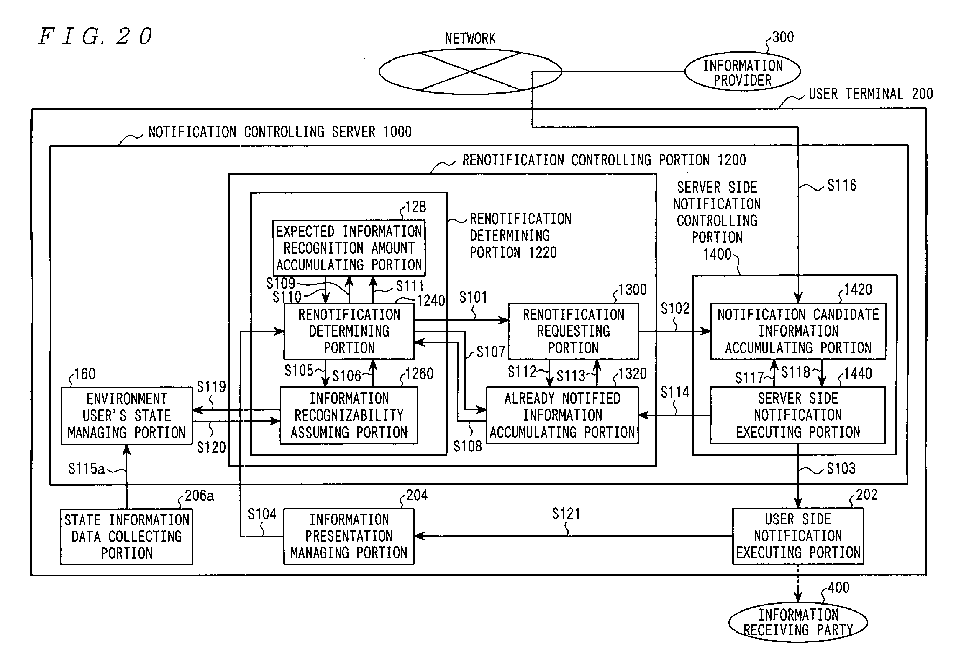

Subsequently, a variation of the information notification system 10 related to the present embodiment will be described. An example of variation is shown in FIG. 20. That is, in FIG. 16, the whole notification controlling server 1000 is connected to the user terminal 200 through a network, and in contrast, in FIG. 20, the function of the notification controlling server 1000 is located inside the user terminal 200. Employment of such a configuration will deprive necessity of preparing a notification controlling server on a network.

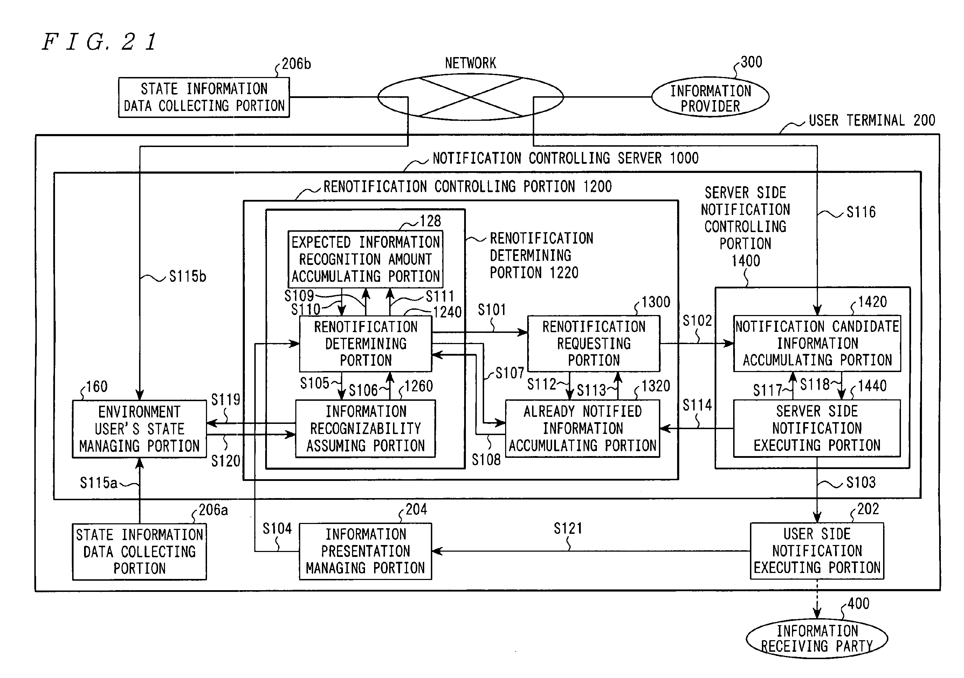

Moreover, another variation is shown in FIG. 21. That is, in addition to the configuration in FIG. 20, the state information data collecting portion 206b is connected to the environment user's state managing portion 160 inside the user terminal 200 through the network. Employment of such a configuration will deprive necessity of preparing a notification controlling server on a network, enables collection of information from a sensor provided on the wall etc. in the periphery of the place where the user is present and enables assumption whether or not the information has been recognized by the user.

Here, in case of FIG. 16, both the state information data collecting portion 206a and the state information data collecting portion 206b are provided, but only one of those state information data collecting portions may be provided.

(Information renotification method)

Incidentally, an information renotification method as described below has been realized in the above described information renotification system. That is, it is an information renotification method of notifying again the already notified information being the information that has been notified to a user, and includes an information recognizability assuming step of assuming information recognizability that indicates a level of the above described user who perceives and recognizes the contents of the above described already notified information and a determining step of determining whether or not the above described already notified information should be notified again based on the assumption result by the above described information recognizability assuming step, and an information renotification method of notifying the above described already notified information again corresponding with the determination result by the above described determining step has been realized. Such an arrangement will enable renotification of information corresponding with user's information recognizability.

In addition, it is desirable that an environment state obtaining step of obtaining the above described user's environment state is included further and, in the above described information recognizability assuming step, the above described information recognizability is assumed based on the above described user's environment state obtained in the above described environment state obtaining step. Such an arrangement will enable determination of user's information recognizability based on user's states at the time of notification after information has been notified to the user and user reaction etc. so that renotification is implemented based on that result. In particular, in Push type information notification that is not originated in user requests, information can be conveyed to a user without fail.

Moreover, it is desired that an already notified information accumulating step of accumulating the above described already notified information is included further so that the above described already notified information accumulated in the above described already notified information accumulating step is notified again in the case where the determination result by the above described determining step specifies that notification should be implemented again. With such an arrangement, once notified information is accumulated as is and therefore the information can be renotified easily.

In addition, it is desired that an expected recognition information amount calculating step of calculating the expected recognition information amount being an amount that is assumed based on the assumption result in the above described information recognizability assuming step recognized on the above described already notified information is included further so as to determine, in the above described determining step, whether or not the above described already notified information should be notified again corresponding with the expected recognition information amount calculated in the above described expected recognition information amount calculating step. Determining whether or not notification should be implemented again corresponding with the expected recognition information amount, information can be renotified more appropriately.

Moreover it is desired that an expected recognition information amount accumulating step of accumulating the expected recognition information amount calculated in the above described expected recognition information amount calculating step is included further so as to determine, in the above described determining step, whether or not the above described already notified information should be notified again corresponding with the expected recognition information amount newly calculated in the above described expected recognition information amount calculating step and the expected recognition information amount in the past that has been accumulated in the above described expected recognition information amount accumulating step. Utilizing again the expected information recognition amount calculated at the time of renotification determination in the past, the expected information recognition amount on the same information that has been presented a plurality of times can be added, and thereby, even in the case where each notification amount is not much, the possibility of recognition of the information is made higher so that more accurate renotification determination can be realized.

Here, in the above described determining step, it is desired to determine whether or not the already notified information should be notified again corresponding with the importance level of the above described already notified information. Such a configuration enables adjustment of renotification possibility corresponding with importance level of information so that important information is renotified without fail to make the user recognize it.

The information notification system and the information notification method according to the present invention can be applied to a system notifying information. The present invention can be used when information is notified to the user and the user is made to recognize the information.

For the above description, the following inventions can be derived.

(1) A notification-purpose user's state managing apparatus comprising:

user's internal state assuming means for assuming a user's internal state based on an observable state element; and

user's notification utility assuming means for assuming utility to a user receiving information when information is notified, based on the user's internal state. This configuration makes it possible to assume an internal state from observable state elements, for example a user's operation state and a task state and to assume the effect of information notification based on the assumption.

(2) The notification-purpose user's state managing apparatus set out in the item (1), wherein the user's internal state assuming means assumes at least one of an information recognizability showing a level at which a user perceives and recognizes the contents of information and a task interruption level showing a level at which a task being executed by the user is interrupted by information notification, as an element showing the user's internal state.

(3) The notification-purpose user's state managing apparatus set out in the item (2), wherein the user's internal state assuming means assumes a probability of at least one of the information recognizability and the task interruption level using a Bayesian network.

(4) The notification-purpose user's state managing apparatus set out in any one of the items (1) to (3), wherein the user's notification utility assuming means calculates an expected utility showing utility expected when information is notified, based on the user's internal state.

(5) The notification-purpose user's state managing apparatus set out in the item (4), wherein the user's notification utility assuming means calculates an expected utility from at least one of an information amount capable of being notified within a predetermined time and an information processing amount for a main task within the predetermined time.

(6) The notification-purpose user's state managing apparatus set out in any one of the items (1) to (5), comprising:

information accumulating means for accumulating at least one of the observable state element and feedback information from the user; and

user's state model updating means for updating the user's internal state based on the accumulated information.

(7) The notification-purpose user's state managing apparatus set out in the item (6), further comprising observable state element determining means for determining whether or not an observable state element having a predetermined occurrence frequency or below among the accumulated information and a newly acquired observable state element coincide with each other.

(8) A notification controlling apparatus comprising notification executing means for determining whether or not information is notified based on utility to a user receiving information when the information is notified, and notifying the information based on the determination. This configuration makes it possible to effectively notify information to the user.

(9) The notification controlling apparatus set out in the item (8), wherein the notification executing means determines whether or not information is notified based on the result of comparison between an expected utility showing utility expected when information is notified and a preset value.

(10) An information notification apparatus comprising: a notification-purpose user state managing apparatus; and a notification controlling apparatus,

wherein the notification-purpose user state managing apparatus comprises:

user's internal state assuming means for assuming a user's internal state based on an observable state element;

and
user's notification utility assuming means for assuming utility to a user receiving information when information is notified, based on the user's internal state, and
the notification controlling apparatus comprises:

notification executing means for determining whether or not information is notified based on the utility and notifying information based on the determination. This configuration makes it possible to effectively notify information to the user because an internal state can be assumed from observable state elements, for example a user's operation state and a task state, and based on the assumption, the effect of information notification can be assumed.

(11) An information notification system comprising: a notification-purpose user state managing apparatus; and a notification controlling apparatus,
wherein the notification-purpose user state managing apparatus comprises:

user's internal state assuming means for assuming a user's internal state based on an observable state element; and
user's notification utility assuming means for assuming utility to a user receiving information when information is notified, based on the user's internal state, and
the notification controlling apparatus comprises:

notification executing means for determining whether or not information is notified based on the utility and notifying information based on the determination. This configuration makes it possible to effectively notify information to the user because an internal state can be assumed from observable state elements, for example a user's operation state and a task state, and based on the assumption, the effect of information notification can be assumed.

(12) An information notification method comprising the steps of:

assuming a user's internal state based on an observable state element;
assuming utility to a user receiving information when information is notified, based on the user's internal state;
determining whether or not information is notified based on the utility; and
notifying information based on the determination. This configuration makes it possible to effectively notify information to the user because an internal state can be assumed from observable state elements, and based on the assumption, the effect of information notification can be assumed.

(13) The information notification method set out in the item (12), wherein the step of assuming the user's internal state comprises a step of assuming at least one of an information recognizability showing a level at which a user perceives and recognizes the contents of information and a task interruption level showing a level at which a task being executed by the user is interrupted by information notification, as an element showing the user's internal state.
(14) The information notification method set out in the item (12) or (13), wherein the step of assuming utility to a user comprises a step of calculating an expected utility showing utility expected when information is notified based on the user's internal state.
(15) The information notification method set out in the item (14), wherein the step of calculating the expected utility comprises a step of calculating an expected utility from at least one of an information amount capable of being notified within a predetermined time and an information processing amount for a main task within the predetermined time.
(16) The information notification method set out in the item (14) or (15), wherein the determining step comprises a step of determining whether or not the expected utility meets a preset value.
(17) The information notification method set out in the item (12), further comprising the steps of:

accumulating the observable state element; and
determining whether or not an observable state element having a predetermined occurrence frequency or below among the accumulated information and a newly acquired observable state element coincide with each other.

(18) An information renotification system renotifying notified information being information notified to a user, comprising:

information recognizability assuming means (corresponding to, for example, the information recognizability assuming portion 1260 in FIG. 16) for assuming an information recognizability showing a level at which the user perceives and recognizes the notified information; and

determining means (corresponding to, for example, the renotification determining portion 1240 in FIG. 16) for determining whether the notified information is renotified based on the result of assumption by the information recognizability assuming means,

wherein the notified information is renotified according to the result of determination by the determining means. This configuration makes it possible to renotify information according to user's information recognizability.

(19) The information renotification system set out in the item (18), further comprising environment state acquiring means (corresponding to, for example, an environment user's state managing portion 160 in FIG. 16) for acquiring the user's environment state,

wherein the information recognizability assuming means assumes the information recognizability based on the user's environment state acquired by the environment state acquiring means. This configuration makes it possible to determine user's information recognizability based on the use's state, the user's reaction and the like at the time of notification after notification of information and renotify the information based on the result of the determination. Particularly, in Push type information notification not associated with user's request, information can be reliably notified to the user.

(20) The information renotification system set out in the item (18) or (19), further comprising notified information accumulating means (corresponding to, for example, a notified information accumulating portion 1320 in FIG. 16) for accumulating the notified information, wherein if the result of determination by the determining means indicates that information should be renotified, the notified information accumulated in the notified information accumulating means is renotified. This configuration makes it possible to easily renotify information because information once notified is directly accumulated.

(21) The information renotification system set out in any one of the items (18) to (20), further comprising expected recognized information amount calculating means (corresponding to, for example, the renotification determining portion 1240 in FIG. 16) for calculating an expected recognized information amount being an amount assumed based on the result of assumption by the information recognizability assuming means and recognized for the notified information,

wherein the determining means determines whether the notified information is renotified according to the expected recognized information amount calculated by the expected recognized information amount calculating means. By determining whether information is renotified according to the expected recognized information amount, information can be appropriately notified.

(22) The information renotification system set out in the item (21), further comprising expected recognized information amount accumulating means (corresponding to, for example, the expected information recognition amount accumulating portion 128 in FIG. 16) for accumulating an expected recognized information amount calculated by the expected recognized information amount calculating means,

wherein the determining means determines whether the notified information is renotified according to an expected recognized information amount newly calculated by the expected recognized information amount calculating means and a past expected recognized information amount accumulated in the expected recognized information amount accumulating means. By reusing an expected information recognition amount calculated at the time of determination of renotification in the past, an expected information recognition amount for same information presented multiple times can be added, whereby even if each amount of information notified is small, more accurate determination of renotification can be realized on the assumption that the possibility that information has been recognized is high.

(23) The information renotification system set out in any one of the items (18) to (22), wherein the determining means determines whether the notified information is renotified according to the importance of the notified information. This configuration makes it possible to adjust the possibility of renotification according to the importance of information and to reliably renotify important information and make the user recognize the information.

(24) A terminal apparatus comprising means for outputting information related to notified information being information presented to a user in a self apparatus (corresponding to, for example, an information presentation managing portion 204 in FIG. 16). By outputting information related to notified information presented to the user from a user terminal, the information can be used to appropriately renotify information.

(25) The terminal apparatus set out in the item (24), further comprising means for acquiring user's state information related to a user's state in the self apparatus and outputting the information (corresponding to, for example, a state information-purpose data collecting portion 206a in FIG. 16). By outputting user's state information and using the information, user's information recognizability can be determined based on a user's state, a user's reaction and the like when information is notified, and the information can be renotified based on the result of the determination.

(26) An information renotification method for renotifying notified information being information notified to a user, comprising:

an information recognizability assuming step of assuming an information recognizability showing a level at which the user perceives and recognizes the contents of the notified information; and

a determining step of determining whether the notified information is renotified based on the result of assumption in the information recognizability assuming step,

wherein the notified information is renotified according to the result of determination in the determining step. This configuration makes it possible to renotify information according to user's information recognizability.

(27) The information renotification method set out in the item (26), further comprising an environment state acquiring step of acquiring the user's environment state,

wherein in the information recognizability assuming step, the information recognizability is assumed based on the user's environment state acquired in the environment state acquiring step. This configuration makes it possible to determine user's information recognizability based on the use's state, the user's reaction and the like at the time of notification after notification of information and renotify the information based on the result of the determination. Particularly, in Push type information notification not associated with user's request, information can be reliably notified to the user.

(28) The information renotification method set out in the item (26) or (27), further comprising a notified information accumulating step of accumulating the notified information, wherein if the result of determination in the determining step indicates that information should be renotified, the notified information accumulated in the notified information accumulating step is renotified. This configuration makes it possible to easily renotify information because information once notified is directly accumulated.

(29) The information renotification method set out in any one of the items (26) to (28), further comprising an expected recognized information amount calculating step of calculating an expected recognized information amount being an amount assumed based on the result of assumption in the information recognizability assuming step and recognized for the notified information,

wherein in the determining step, whether the notified information is renotified is determined according to the expected recognized information amount calculated in the expected recognized information amount calculating step. By determining whether information is renotified according to the expected recognized information amount, information can be appropriately notified.

(30) The information renotification method set out in the item (29), further comprising an expected recognized information amount accumulating step of accumulating an expected recognized information amount calculated in the expected recognized information amount calculating step,

wherein in the determining step, whether the notified information is renotified is determined according to an expected recognized information amount newly calculated in the expected recognized information amount calculating step and a past expected recognized information amount accumulated in the expected recognized information amount accumulating step. By reusing an expected information recognition amount calculated at the time of determination of renotification in the past, an expected information recognition amount for same information presented multiple times can be added, whereby even if each amount of information notified is small, more accurate determination of renotification can be realized on the assumption that the possibility that information has been recognized is high.

(31) The information renotification method set out in any one of the items (26) to (30), wherein in the determining step, whether the notified information is renotified is determined according to the importance of the notified information. This configuration makes it possible to adjust the possibility of renotification according to the importance of information and to reliably renotify important information and make the user recognize the information.

**Claims**

1. An information notification system (10) comprising:

an information recognizability assuming portion (1260) for assuming an information recognizability showing a level at which said user perceives and recognizes the contents of notified information being information notified to said user;

a determining portion (1240) for determining whether said notified information is renotified based on a result of assumption by said information recognizability assuming portion (1260); and

an acquiring portion (206a, 206b) for acquiring said user's environment state,

wherein said information recognizability assuming portion (1260) is adapted to assume said information recognizability based on said user's environment state acquired by said environment state acquiring portion (206a, 206b), and
wherein said notified information is renotified according to a result of determination by said determining portion (1240).

2. The system (10) of claim 1, further comprising an expected information recognition amount calculating portion for calculating an expected information recognition amount being an amount assumed based on the result of assumption by said information recognizability assuming portion (1260) and being recognized for said notified information,
wherein said determining portion (1240) is adapted to determine whether said notified information is renotified according to the expected information recognition amount calculated by said expected information recognition amount calculating portion.

3. The system (10) of claim 2, further comprising an expected information recognition amount accumulating portion (128) for accumulating an expected information recognition amount calculated by said expected information recognition amount calculating portion,
wherein said determining portion (1240) is adapted to determine whether said notified information is renotified according to an expected information recognition amount newly calculated by said expected information recognition amount calculating portion and a past expected information recognition amount accumulated in said expected information recognition amount accumulating portion (128).

4. An information notification method comprising the steps of:

assuming an information recognizability showing a level at which said user perceives and recognizes the contents of notified information being information notified to said user; and
determining whether said notified information is renotified based on a result of assumption in said information recognizability assuming step,
wherein said notified information is renotified according to a result of determination in said determining step.

5. The method of claim 4, further comprising a step of calculating an expected information recognition amount being an amount assumed based on the result of assumption in said information recognizability assuming step and being recognized for said notified information,
wherein said determining step determines whether said notified information is renotified according to the expected information recognition amount calculated in said calculating step.

6. The method of claim 5, further comprising a step of accumulating an expected information recognition amount calculated in said expected information recognition amount calculating step,
wherein said determining step determines whether said notified information is renotified according to an expected information recognition amount newly calculated in said expected information recognition amount calculating step and a past expected information recognition amount accumulated in said expected information recognition amount accumulating step.

*FIG. 1*

# FIG. 2

*FIG. 2* — Sequence diagram with vertical lifelines for: INFORMATION RECEIVING USER, SENSE PORTION (~150), ENVIRONMENT USER'S STATE MANAGING PORTION (~140), NOTIFICATION-PURPOSE USER STATE MANAGING PORTION (~110), NOTIFICATION CONTROLLING PORTION (~120), SERVICE PROVIDER, and USER INTERFACE PORTION (~130).

- MOVEMENT, TERMINAL UTILIZATION AND OTHERS
- PERIODICAL SENSOR INFORMATION NOTIFICATION — S202
- ENVIRONMENT USER'S STATE INFORMATION MAKING — S204
- NOTIFICATION INFORMATION CONTENTS TO BE NOTIFIED AS NEEDED — S208
- NOTIFICATION UTILITY QUERY — S210
- ENVIRONMENT AND USER'S STATE INFORMATION — S206
- CALCULATE NOTIFICATION UTILITY AND ITS INFORMATION EXPRESSION INDEX — S212
- NOTIFICATION UTILITY — S214
- DETERMINE WHETHER OR NOT NOTIFICATION IS IMPLEMENTED — S216
- NOTIFICATION INFORMATION CONTENTS + INFORMATION EXPRESSION INDEX + (PARAMETER) — S218
- DISPLAY NOTIFICATION INFORMATION CONTENTS — S220
- INFORMATION PRESENTATION — S222
- INTERACTION — S224
- FEEDBACK INFORMATION — S226

EP 1 967 969 A2

39

# FIG. 3

| INFORMATION RECEIVING USER | SENSE PORTION ~150 | ENVIRONMENT USER'S STATE MANAGING PORTION ~140 | NOTIFICATION-PURPOSE USER STATE MANAGING PORTION ~110 | NOTIFICATION CONTROLLING PORTION ~120 | SERVICE PROVIDER |

MOVEMENT, TERMINAL UTILIZATION AND OTHERS

PERIODICAL SENSOR INFORMATION NOTIFICATION ~S302

PERIODICAL ENVIRONMENT AND USER'S STATE INFORMATION ~S304

NOTIFY REFERENCE/ NOTIFY UTILITY

NOTIFICATION INFORMATION CONTENTS TO BE NOTIFIED AS NEEDED ~S306

USER INTERFACE PORTION ~130

~S308

SET UTILITY REFERENCE VALUE

~S310

OCCURRENCE OF FULFILLING UTILITY REFERENCE VALUE

INFORMATION EXPRESSION INDEX

NOTIFICATION INFORMATION CONTENTS + INFORMATION EXPRESSION INDEX + (PARAMETER)

~S312

~S314

DISPLAY NOTIFICATION INFORMATION CONTENTS ~S316

INFORMATION PRESENTATION

~S318

INTERACTION

~S320

FEEDBACK INFORMATION

~S322

EP 1 967 969 A2

$$F\ I\ G.\ 4$$

EP 1 967 969 A2

## FIG. 5

FULL-SCREEN DISPLAY

BOTTOM-SCREEN DISPLAY

TODAY'S HIGHEST TEMPERATURE IS 32°C

TRANSFER GUIDE, ABC CORPORATION

1. TRANSFER GUIDE

2. LAST TRAIN TRANSFER GUIDE

3. TONIGHT HOTEL <NOT FREE>

4. TIME TABLE

5. LAST TRAIN TIME TABLE

6. FLIGHT TIME TABLE

TODAY'S HIGHEST
TEMPERATURE IS 32°C

HORIZONTAL (VERTICAL) SCROLLING
OR SWITCHING DISPLAY

# F I G. 6

INFORMATION AMOUNT,
URGENCY OF NOTIFICATION
INFORMATION

t=n

INFORMATION
EXPRESSION

DISPLAY
SPEED ADJUSTING
BUTTON

USER MOTION
STATE

INFORMATION
RECOGNIZABILITY

DISPLAY
SIZE ADJUSTING
BUTTON

TASK
INTERRUPTION
LEVEL

TASK STATE
(INCLUDING GAZING
STATE)

TASK SPEED

INFORMATION
PROVIDING
INTERVAL

U

*FIG. 7*

EP 1 967 969 A2

# FIG. 8

| INFORMATION EXPRESSION INDEX | MEDIA TYPE | POSITION/SIZE | TEXT DISPLAY METHOD | UPDATING SPEED |
|---|---|---|---|---|
| 0 | TEXT | BOTTOM-SCREEN/SMALL | HORIZONTAL SCROLLING | SLOW |
| 1 | TEXT | BOTTOM-SCREEN/SMALL | HORIZONTAL SCROLLING | FAST |
| 2 | TEXT | BOTTOM-SCREEN/LARGE | HORIZONTAL SCROLLING | SLOW |
| 3 | TEXT | BOTTOM-SCREEN/LARGE | HORIZONTAL SCROLLING | FAST |
| 4 | TEXT | BOTTOM-SCREEN/SMALL | SWITCHING | SLOW |
| 5 | TEXT | BOTTOM-SCREEN/SMALL | SWITCHING | FAST |
| 6 | TEXT | BOTTOM-SCREEN/LARGE | SWITCHING | SLOW |
| 7 | TEXT | BOTTOM-SCREEN/LARGE | SWITCHING | FAST |
| .... | .... | .... | .... | .... |
| N-1 | AUDIO | — | — | — |
| N | VIBRATION | — | — | — |

EP 1 967 969 A2

EP 1 967 969 A2

## F I G. 9

CONTROL SUBJECT ELEMENT  
NON-OBSERVATION STATE ELEMENT  
FEEDBACK INFORMATION ELEMENT

| STATE | PROBABILITY |
|---|---|
| NONE | 0.1 |
| SMALL WINDOW | 0.5 |
| LARGE WINDOW | 0.4 |

| STATE | PROBABILITY |
|---|---|
| STAYING STILL | 0.7 |
| WALKING | 0.3 |

| STATE | PROBABILITY |
|---|---|
| NONE | 0.7 |
| ELECTRONIC MAIL | 0.3 |

INFORMATION EXPRESSION

USER MOTION STATE

TASK STATE (INCLUDING GAZING STATE)

OBSERVABLE STATE ELEMENT

INFORMATION RECOGNIZABILITY

TASK INTERRUPTION LEVEL

DISPLAY SPEED ADJUSTING OPERATION

DISPLAY SIZE ADJUSTING OPERATION

TASK SPEED

| TASK INTERRUPTION LEVEL | SIZE ADJUSTING CONTROL | | |
|---|---|---|---|
| | LARGE | SMALL | NONE |
| LOW | 0.2 | 0.3 | 0.5 |
| HIGH | 0.1 | 0.7 | 0.2 |

| TASK INTERRUPTION LEVEL | TASK SPEED | |
|---|---|---|
| | NORMAL | SLOW |
| LOW | 0.8 | 0.2 |
| HIGH | 0.2 | 0.8 |

| TASK STATE | INFORMATION EXPRESSION METHOD STATE | TASK INTERRUPTION LEVEL | |
|---|---|---|---|
| | | HIGH | LOW |
| NONE | NONE | 0.1 | 0.9 |
| NONE | SMALL WINDOW | 0.2 | 0.8 |
| NONE | LARGE WINDOW | 0.3 | 0.7 |
| ELECTRONIC MAIL | NONE | 0.2 | 0.8 |
| ELECTRONIC MAIL | SMALL WINDOW | 0.4 | 0.8 |
| ELECTRONIC MAIL | LARGE WINDOW | 0.9 | 0.1 |

# FIG. 10

LINK INFORMATION
ACCESS BUTTON

DISPLAY STOPPAGE BUTTON

📶      🔋

TODAY'S HIGHEST TEMPERATURE IS 32°C

⬅️ ➡️     🗖 ✖️

📶      🔋

TRANSFER GUIDE, ABC CORPORATION

1. TRANSFER GUIDE

2. LAST TRAIN TRANSFER GUIDE

3. TONIGHT HOTEL <NOT FREE>

4. TIME TABLE

5. LAST TRAIN TIME TABLE

6. FLIGHT TIME TABLE

⬅️ TODAY'S HIGHEST
TEMPERATURE IS 32°C ➡️ 🗖 ✖️

UPDATE FREQUENCY (SPEED)
ADJUSTING BUTTON

DISPLAY POSITION/SIZE
ADJUSTING BUTTON

EP 1 967 969 A2

# FIG. 11

| FEEDBACK INFORMATION INDEX | CONTENT |
|---|---|
| 0 | NONE |
| 1 | DISPLAY COMMENCEMENT |
| 2 | DISPLAY EXPANSION |
| 3 | DISPLAY REDUCTION |
| 4 | DISPLAY STOPPAGE |
| 5 | PRIOR TO SPEED UPDATING BUTTONING |
| 6 | AFTER SPEED UPDATING BUTTONING |
| 7 | TASK SPEED |

# FIG. 12

EXPLANATORY TABLE SHOWING HISTORY INFORMATION TABLE

| TIME | MOTION STATE | TASK STATE | INFORMATION EXPRESSION | FEEDBACK |
|---|---|---|---|---|
| 20040926:23:12:54 | STAYING STILL | Web | 4 | 6 |
| 20040926:23:13:10 | WALKING | Web | 6 | 3 |
| 20040926:23:14:24 | WALKING | NONE | 0 | 0 |

EP 1 967 969 A2

| INDEX | MOTION STATE | TASK STATE | INFORMATION EXPRESSION INDEX (FIG.7) | OCCURRENCE FREQUENCY |
|---|---|---|---|---|
| 0 | STAYING STILL | NONE | 0 | 20 |
| ... | ... | ... | ... | ... |
| i-1 | STAYING STILL | NONE | 1 | 1 |
| i | STAYING STILL | Web | 1 | 10 |
| i+1 | STAYING STILL | E-mail | 1 | 10 |
| i+2 | STAYING STILL | VIDEO | 1 | 1 |
| i+3 | STAYING STILL | NONE | 2 | 11 |
| ... | ... | ... | ... | ... |
| n-1 | WALKING | NONE | 1 | 3 |
| n | WALKING | Web | 1 | 4 |
| n+1 | WALKING | E-mail | 1 | 9 |
| ... | ... | ... | ... | ... |

*F I G. 1 4*

```
                    ┌─────────────┐
                    │   S T A R T │
                    └──────┬──────┘
                           │                                              ◄─────────┐
                           ▼                                                         │
            ╱────────────────────────────╲                                          │
           ╱ INPUT OF COMBINED INDEX      ╲──── S1402                               │
           ╲ WITH LOW OCCURRENCE FREQUENCY ╱                                        │
            ╲────────────────────────────╱                                          │
                           │         ┌─ S1404                                       │
                           ▼ ◄────────────────┐                                     │
            ╱────────────────────────────╲    │                                     │
           ╱ INPUT OF ENVIRONMENT         ╲   │                                     │
           ╲ USER'S STATE INFORMATION      ╱   │                                     │
            ╲────────────────────────────╱    │                                     │
                           │    ┌─ S1406       │                                     │
                           ▼                   │                                     │
              ╱─────────────────────╲     No   │                                     │
             ╱  NOT MATCHING WITH    ╲─────────────────┐                            │
             ╲   COMBINATION?        ╱          │        │                            │
              ╲─────────────────────╱           │        ▼        ┌─ S1410            │
                      │ Yes   ┌─ S1408          │  ┌──────────────────────┐          │
                      ▼                         │  │ ISSUE INFORMATION    │          │
        No  ╱─────────────────────╲             │  │ NOTIFICATION REQUEST │          │
       ◄────╱ FINALIZATION ORDERING ╲           │  └──────────┬───────────┘          │
            ╲  SIGNAL EXISTS?       ╱            │             │      ┌─ S1412         │
             ╲─────────────────────╱            │             ▼                       │
                      │ Yes                     │   ╱─────────────────────╲   No      │
                      │                         │  ╱ FINALIZATION ORDERING ╲──────────┘
                      │                         │  ╲  SIGNAL EXISTS?       ╱
                      │                         │   ╲─────────────────────╱
                      │                         │             │ Yes
                      ▼ ◄───────────────────────────────────────┘
                ┌─────────────┐
                │   E N D     │
                └─────────────┘
```

# FIG. 15

EP 1 967 969 A2

FIG. 16

FIG. 17B

BOTTOM-SCREEN DISPLAY

TRANSFER GUIDE, ABC CORPORATION

1. TRANSFER GUIDE
2. LAST TRAIN TRANSFER GUIDE
3. TONIGHT HOTEL <NOT FREE>
4. TIME TABLE
5. LAST TRAIN TIME TABLE
6. FLIGHT TIME TABLE

TODAY'S HIGHEST TEMPERATURE IS 32°C

FIG. 17A

FULL-SCREEN DISPLAY

TODAY'S HIGHEST TEMPERATURE IS 32°C

# FIG. 18

EP 1 967 969 A2

# F I G. 1 9

CONTROLLABLE ELEMENT

INFORMATION
EXPRESSION

NON—OBSERVATION STATE ELEMENT    OBSERVABLE STATE ELEMENT

INFORMATION
RECOGNIZABILITY

REACTION
INFORMATION

USER FEATURE

USER STATE

TASK STATE

OBSERVABLE STATE ELEMENT

EP 1 967 969 A2

# F I G. 2 0

NETWORK

INFORMATION PROVIDER 300

USER TERMINAL 200

NOTIFICATION CONTROLLING SERVER 1000

RENOTIFICATION CONTROLLING PORTION 1200

RENOTIFICATION DETERMINING PORTION 1220

SERVER SIDE NOTIFICATION CONTROLLING PORTION 1400

S116

EXPECTED INFORMATION RECOGNITION AMOUNT ACCUMULATING PORTION 128

S109
S110
1240

RENOTIFICATION DETERMINING PORTION

S101

RENOTIFICATION REQUESTING PORTION 1300

S102

NOTIFICATION CANDIDATE INFORMATION ACCUMULATING PORTION 1420

S111

S107

S105
S106
1260

S112
S113
1320

S117
S118
1440

160

INFORMATION RECOGNIZABILITY ASSUMING PORTION

ALREADY NOTIFIED INFORMATION ACCUMULATING PORTION

S114

SERVER SIDE NOTIFICATION EXECUTING PORTION

ENVIRONMENT USER'S STATE MANAGING PORTION

S119
S120

S108

S103

S115a

STATE INFORMATION DATA COLLECTING PORTION 206a

S104

INFORMATION PRESENTATION MANAGING PORTION 204

S121

USER SIDE NOTIFICATION EXECUTING PORTION 202

INFORMATION RECEIVING PARTY 400

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9081099 A

- JP 2000099441 A

**Non-patent literature cited in the description**

- Attentive User Interface. ACM Communications of the ACM. March 2003, vol. 46, 31-72
- **D. SCOTT MCCRICKARD ; RICHARD CATRAMBONE ; C.M. CHEWER ; JOHN T. STASKO.** Establishing tradeoffs that leverage attention for utility: empirically evaluating information display in notification systems. *International Journal of Human-Computer Studies,* May 2003, vol. 58 (5), 547-582

- **NICKY KERN ; BERNT SCHIELE.** Multi-Sensor Activity Context Detection for Wearable Computing. *In European Symposium on Ambient Intelligence(EU-SAI,* November 2003